(19) Europäisches Patentamt / European Patent Office / Office européen des brevets

(11) **EP 3 879 197 B1**

(12) **EUROPEAN PATENT SPECIFICATION**

(45) Date of publication and mention
of the grant of the patent:
**01.07.2026 Bulletin 2026/27**

(21) Application number: **19882065.6**

(22) Date of filing: **30.08.2019**

(51) International Patent Classification (IPC):
**F24F 11/39** (2018.01)   **F24F 11/65** (2018.01)
**F24F 110/10** (2018.01)   **F24F 11/49** (2018.01)
**F24F 140/40** (2018.01)

(52) Cooperative Patent Classification (CPC):
**F24F 11/65; F24F 11/39; F24F 11/49;**
F24F 2110/10; F24F 2140/40; Y02B 30/70

(86) International application number:
**PCT/JP2019/034208**

(87) International publication number:
**WO 2020/095521 (14.05.2020 Gazette 2020/20)**

(54) **AIR-CONDITIONING CONTROL DEVICE, REFRIGERANT CIRCUIT CONTROL DEVICE, INSPECTION METHOD, AND PROGRAM**

KLIMATISIERUNGSREGELVORRICHTUNG, STEUERVORRICHTUNG FÜR KÄLTEMITTELKREISLAUF, INSPEKTIONSVERFAHREN UND PROGRAMM

DISPOSITIF DE COMMANDE DE CLIMATISATION, DISPOSITIF DE COMMANDE DE CIRCUIT DE RÉFRIGÉRANT, PROCÉDÉ DE CONTRÔLE, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2018 JP 2018211576**

(43) Date of publication of application:
**15.09.2021 Bulletin 2021/37**

(73) Proprietors:
• **KABUSHIKI KAISHA TOSHIBA**
**Minato-ku**
**Tokyo**
**105-0023 (JP)**
• **Carrier Japan Corporation**
**Tokyo 141-0032 (JP)**

(72) Inventors:
• **FUJIWARA, Kenichi**
**Tokyo (JP)**
• **SUNAGAWA, Eiichi**
**Tokyo (JP)**
• **YAMAMOTO, Takahiro**
**Tokyo (JP)**
• **OTSUKI, Tomoshi**
**Tokyo (JP)**
• **TAKEYA, Nobuyuki**
**Fuji-shi, Shizuoka 416-8521 (JP)**
• **KUBOTA, Tsuyoshi**
**Fuji-shi, Shizuoka 416-8521 (JP)**

(74) Representative: **Marks & Clerk LLP**
**15 Fetter Lane**
**London EC4A 1BW (GB)**

(56) References cited:
CN-A- 108 050 650      JP-A- 2000 074 451
JP-A- 2006 198 582     JP-A- 2015 210 063
JP-A- 2018 501 457     JP-A- S54 145 069
KR-B1- 101 020 171     US-A1- 2012 125 206
US-A1- 2015 254 958    US-A1- 2018 229 173

EP 3 879 197 B1

**Description**

Technical Field

Embodiments of the present invention relate to an air-conditioning control device, an inspection method, and a program.

Background Art

Generally, structures such as buildings are equipped with air conditioners for performing air conditioning in the room, but dirt such as dust accumulates on filters provided in the air conditioners in accordance with the operation of the air conditioners.

When the air conditioner is operated with the filter having dirt accumulated in this manner, the amount of air used for heat exchange in the air conditioner decreases, and a desired air conditioning effect cannot be obtained. For this reason, the filter needs to be regularly cleaned when using the air conditioner.

Incidentally, the filter needs to be properly cleaned from the viewpoint of the electricity cost for operating the air conditioner and the product life of the air conditioner itself.

By the way, as described above, cleaning the filter regularly is desirable, but it is difficult to determine the timing for cleaning the filter.

Therefore, a mechanism for inspecting (detecting) that dirt has accumulated on the filter to the extent that it needs to be cleaned (hereinafter referred to as clogging of filter).

The above-described clogging of the filter can be inspected by using, for example, an air flow meter or an odor sensor. However, since the air flow meter and the odor sensor are expensive, it is not practical to use the air flow meter and the odor sensor to inspect the clogging of the filter. For this reason, there is a demand for a mechanism capable of inspecting clogging of a filter at low costs.

CN108050650A generally relates to an air conditioner filth blockage detecting method and device and a computer readable storage medium. The air conditioner filth blockage detecting method comprises the steps that an air conditioner is controlled to operate when a filth blockage detecting instruction is received, and under the situation that the current indoor temperature is not changed, the first time interval of reducing a preset temperature value of an indoor heat exchanger in the air conditioner is calculated; the current indoor temperature of the air conditioner is obtained, the standard time interval of reducing the preset temperature value of the indoor heat exchanger is determined according to the current indoor temperature in pre-stored data; and the first time interval is compared with the standard time interval, and whether filth blockage of the indoor heat exchanger occurs or not is judged according to a comparative result.

JP2000074451A generally relates to detecting choking of air filter without requiring any extra apparatus by utilizing temperature variation of an indoor side heat exchanger due to variation in the volume of air passing through the air filter. The choking detector of air filter comprises a temperature sensor for detecting the duct temperature of an indoor side heat exchanger, an operating time integrating section, an operation control section for continuing operation while changing the rotation mode of an indoor side fan for a predetermined time every time when a predetermined operating time is integrated at the integrating section, a comparing section for monitoring and determining the duct temperature variation width of the indoor side heat exchanger detected by the temperature sensor for the predetermined time when the indoor side fan is operating in changed rotation mode and comparing the variation width with a preset reference width, and a section for alarming the replacing time of air filter if the duct temperature variation width is smaller than the reference width.

Citation List

Patent Literature

Patent Literature 1: JP 2000-074451 A

Summary of Invention

Technical Problem

Therefore, the problem to be solved by the present invention is to provide an air-conditioning control device, an inspection method, and a program capable of inspecting clogging of a filter.

Solution to Problem

According to a first aspect of the invention, an air-conditioning control device according to claim 1 is provided. According to a second aspect of the invention, an inspection method according to claim 15 is provided. According to a third aspect of the invention, a program according to claim 16 is provided.

Brief Description of Drawings

FIG. 1 is a diagram showing an example of a configuration of an air conditioning control system according to a first embodiment.
FIG. 2 is a diagram illustrating an example of a refrigerant circuit in the air conditioner.
FIG. 3 is a diagram illustrating an outline of heat exchange in the air conditioner.
FIG. 4 is a diagram showing an example of a hardware configuration of the air conditioning control device.
FIG. 5 is a diagram illustrating a principle of inspecting the clogging of a filter.
FIG. 6 is a flowchart showing an example of a processing procedure of the air-conditioning control device.
FIG. 7 is a table showing an example of an operation schedule of the air conditioner when setting an inspection operation mode.
FIG. 8 is a table showing an example of a data structure of log data.
FIG. 9 is a graph showing transition of a heat exchange temperature shown by the temperature data included in log data, and transition of a valve opening degree included in the log data.
FIG. 10 is a table showing an example of time constants calculated in the inspection process.
FIG. 11 is a table showing an example of an increase rates of the time constants.
FIG. 12 is a diagram illustrating a multi-air conditioner type air conditioner.
FIG. 13 is a table showing an example of an operation schedule of the multi-air conditioner type air conditioner.
FIG. 14 is a diagram illustrating a configuration of an air conditioner equipped with a plurality of fans.
FIG. 15 is a flowchart showing an example of a processing procedure of an air-conditioning control device according to a second embodiment.

Mode for Carrying Out the Invention

Embodiments will be described hereinafter with reference to the accompanying drawings.

(First Embodiment)

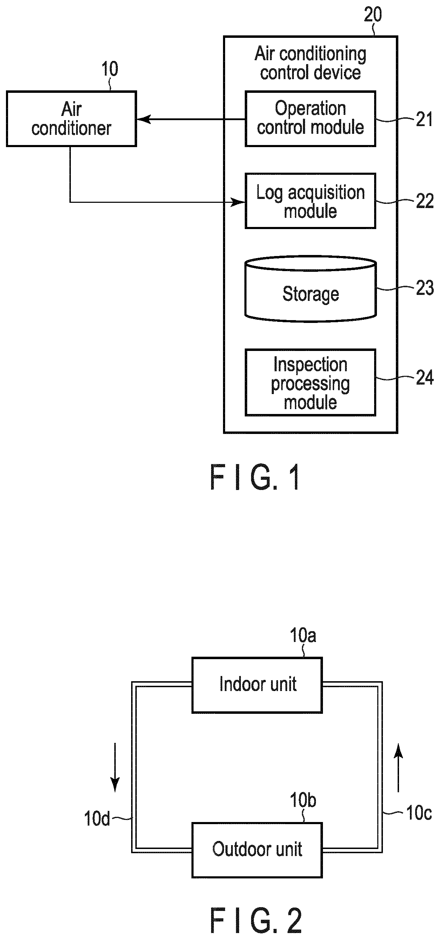

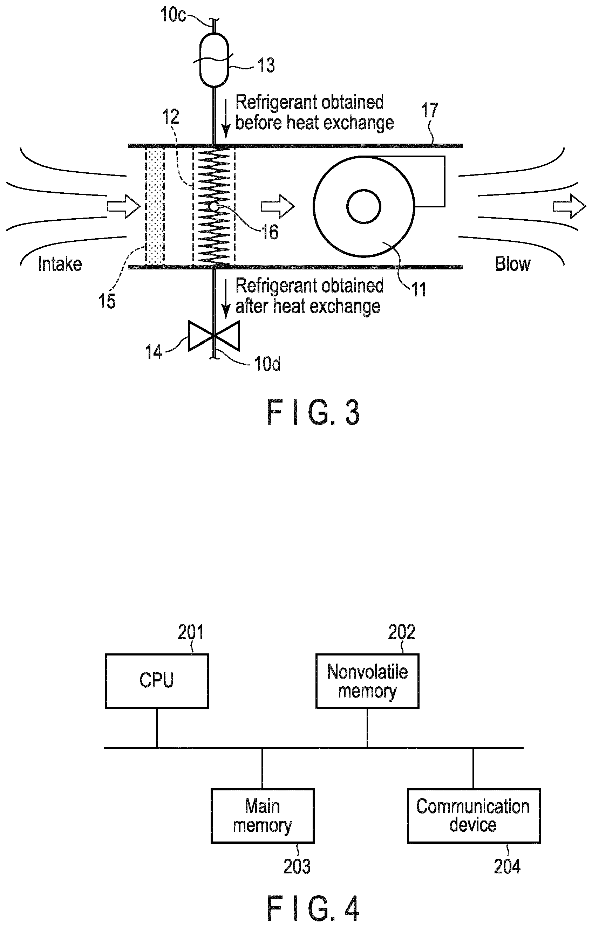

FIG. 1 shows an example of a configuration of an air conditioning control system according to a first embodiment. As shown in FIG. 1, the air conditioning system includes an air conditioner 10 and an air conditioning control device 20.
The air conditioner 10 is, for example, a refrigerant control type air conditioner (VRF: Variable Refrigerant Flow) installed to perform air conditioning of a space (indoor) such as a room in a building, and includes an indoor unit 10a and an outdoor unit 10b as shown in FIG. 2. In the air conditioner 10, the indoor unit 10a and the outdoor unit 10b are connected by, for example, two pipes 10c and 10d. The indoor unit 10a, the outdoor unit 10b, and the pipes 10c and 10d form a refrigerant circuit that circulate a refrigerant.
According to such an air conditioner 10, air conditioning in the room can be performed by blowing out a heat medium such as air whose temperature is adjusted by exchanging heat with the refrigerant from the indoor unit 10a.
An outline of the heat exchange in the above-described air conditioner 10 (indoor unit 10a) will be described below with reference to FIG. 3.
In this embodiment, the air conditioner 10 includes a fan 11, a heat exchanger 12, a compressor 13, an expansion valve 14, a filter 15, a temperature sensor (thermometer) 16, and the like. The fan 11, the heat exchanger 12, the expansion valve 14, and the filter 15 are provided, for example, in the indoor unit 10a. In contrast, the compressor 13 is provided in, for example, the outdoor unit 10b.
The fan 11 is provided in a duct 17 so as to take in outside air (heat medium) into the duct 17 of the indoor unit 10a and blow out the air in the duct 17 taken in from the outside, to the outside.
The heat exchanger 12 is connected to each of the plurality of pipes 10c and 10d connected to the above-described outdoor unit 10b and is provided to perform heat exchange between the refrigerant circulating in the pipes 10c and 10d (refrigerant circuit) and the air in the duct 17.
The compressor 13 is provided in, for example, the pipe 10c connected to the heat exchanger 12, and compresses the refrigerant circulating in the pipe 10c to generate heat.

The expansion valve 14 is provided in, for example, the pipe 10d connected to the heat exchanger 12, and decompresses (expands) and cools the refrigerant circulating in the pipe 10d.

The filter 15 is provided to prevent dust and the like from entering the duct 17 when the outside air is taken into the duct 17 by the fan 11. As shown in FIG. 3, the filter 15 is attached to an intake port or the like through which air is taken into the air conditioner 10.

In this embodiment, the temperature sensor 16 is provided near the heat exchanger 12 provided in the air conditioner 10 (indoor unit 10a). The temperature sensor 16 measures the temperature of the heat exchanger 12 (hereinafter referred to as a heat exchange temperature). The temperature sensor 16 is provided in the vicinity of the center of the heat exchanger 12 in FIG. 3. However, the temperature sensor 16 may be provided at other positions as long as the heat exchange temperature can be measured.

The operation modes of the air conditioner 10 include a heating operation mode, a cooling operation mode, a blowing operation mode, and the like.

In the following descriptions, the operation of the air conditioner 10 in the heating operation mode is referred to as a heating operation, the operation of the air conditioner 10 in the cooling operation mode is referred to as a cooling operation, and the operation of the air conditioner 10 in the blowing operation mode is referred to as a blowing operation.

For example, in the heating operation of the air conditioner 10, as shown in FIG. 3, the refrigerant in the pipe 10c (refrigerant obtained before heat exchange) is supplied to the heat exchanger 12, and the heat generated by the compressor 13 (heat source) provided in the outdoor unit 10b is thereby transmitted to the air in the duct 17 through the surface of the heat exchanger 12 (i.e., heat exchange is performed).

That is, during the heating operation of the air conditioner 10, heat is continuously exchanged between the refrigerant and the air sequentially taken into the duct 17 by the fan 11, and the air to which the heat is transferred by the heat exchange is blown into the room (outside space) by the fan 11 such that the temperature inside the room can be raised.

Incidentally, after heat exchange (refrigerant after heat exchange) is performed in the heating operation of the air conditioner 10, the refrigerant (refrigerant obtained after heat exchange) is decompressed by the expansion valve 14, heat is absorbed by another heat exchanger (not shown) provided in the outdoor unit 10b and the refrigerant is returned to the compressor 13.

The heating operation of the air conditioner 10 has been described here. In the case of the cooling operation of the air conditioner 10, however, the circulation direction of the refrigerant is opposite to that in the heating operation.

That is, in the cooling operation of the air conditioner 10, for example, the refrigerant decompressed in the expansion valve 14 absorbs heat from the air in the duct 17 in the heat exchanger 12 (i.e., heat exchange is performed), and the air having heat thus absorbed (cooled) is blown into the room by the fan 11 such that the temperature of the room can be lowered.

Incidentally, after heat exchange is performed in the cooling operation of the air conditioner 10, the refrigerant is compressed by the compressor 13, radiates heat in the heat exchanger provided in the outdoor unit 10b, and is returned to the expansion valve 14.

According to the operations of the air conditioner 10 (heating operation and cooling operation), the air taken in through the filter 15 by driving the fan 11 is temperature-controlled by the heat exchanger 12 supplied with the refrigerant, and air conditioning in the room can be thereby performed.

In contrast, in the case of the blowing operation of the air conditioner 10, for example, the fan 11 is driven with the expansion valve 14 closed. That is, during the blowing operation of the air conditioner 10, the air which is not subjected to heat exchange is blown out by the fan 11.

The descriptions will return to FIG. 1. The air conditioning control device 20 is connected to the air conditioner 10 and includes an operation control module 21, a log acquisition module 22, storage 23, and an inspection processing module 24.

The operation control module 21 includes a function of setting the control state of the air conditioner 10 (indoor unit 10a). The control states of the air conditioner 10 includes, for example, a start and stop state (on/off state), an operation mode, a set temperature, an amount of air, and the like. The operation control module 21 performs the operation of the air conditioner 10, based on the set control state.

In the present embodiment, for example, an inspection operation mode is assumed to be prepared as an operation mode of the air conditioner 10 other than the heating operation mode, the cooling operation mode, and the blowing operation mode described above. The inspection operation mode is an operation mode for inspecting the above-described clogging of the filter 15. The clogging of the filter 15 means that dirt (dust etc.) is accumulated on the filter 15 to the extent that cleaning is required.

When the inspection operation mode is set as the operation mode of the air conditioner 10, the log acquisition module 22 acquires from the air conditioner 10 the log data including the heat exchange temperature measured by the temperature sensor 16 and the time when the heat exchange temperature is measured. The log data acquired by the log acquisition module 22 is stored in the storage 23.

The inspection processing module 24 inspects the clogging of the filter 15, based on the log data stored in the storage 23. The inspection processing module 24 outputs the inspection result for the clogging of the filter 15.

FIG. 4 shows an example of the hardware configuration of the air conditioning control device 20 shown in FIG. 1. As shown in FIG. 2, the air conditioning control device 20 includes a CPU 201, a nonvolatile memory 202, a main memory 203, a communication device 204, and the like.

The CPU 201 is a hardware processor that controls the operation of each component in the air conditioning control device 20. The CPU 201 performs various programs loaded from the nonvolatile memory 202 which is a storage device into the main memory 203. The programs performed by the CPU 201 include an operating system, various application programs, and the like.

In the present embodiment, the application programs performed by the CPU 201 include, for example, an application program for controlling the air conditioner 10 (hereinafter referred to as an air conditioning control program), an application program for inspecting the above-described clogging of the filter 15 (hereinafter referred to as an inspection program), and the like.

The operation control module 21 included in the air conditioning control device 20 shown in FIG. 1 described above is, for example, a functional unit realized by the CPU 201 performing the air conditioning control program. In addition, the log acquisition module 22 and the inspection processing module 24 included in the air conditioning control device 20 are, for example, functional units realized by the CPU 201 performing the inspection program. The above-described inspection program may be incorporated in the air conditioning control program.

The CPU 201 also performs, for example, a basic input/output system (BIOS), which is a program for hardware control, and the like.

It has been described that the air conditioning control device 20 includes the CPU 201 in FIG. 4. However, the air conditioning control device 20 may be provided with a processor or controller other than the CPU 201 as long as the above program can be performed.

In addition, it has been described that the operation control module 21, the log acquisition module 22, and the inspection processing module 24 included in the air conditioning control device 20 are realized by software (i.e., the CPU 201 performing a program). However, one or all of the modules 21, 22, and 24 may be realized by hardware such as an integrated circuit (IC) or may be realized as a combined configuration of software and hardware.

Incidentally, in the present embodiment, the storage 23 included in air conditioning control device 20 is realized by a storage device such as the above-described nonvolatile memory 202 or the like.

The communication device 204 is a device configured to perform, for example, wired or wireless communication with an external device.

It has been described for convenience that the air conditioning control device 20 includes the CPU 201, the nonvolatile memory 202, the main memory 203, and the communication device 204 in FIG. 4. However, the air conditioning control device 20 may include an input device such as a mouse, a keyboard or the like and an output device such as a display, an indicator lamp (lamp) or the like.

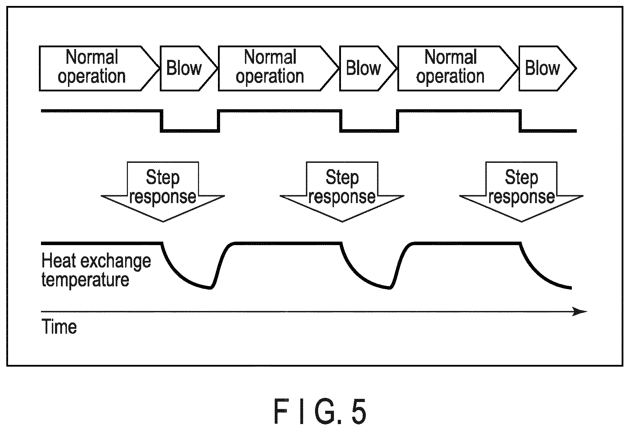

The principle of inspecting the clogging of the filter 15 in the present embodiment will be described here with reference to FIG. 5.

FIG. 5 schematically shows the transition (step response) of the heat exchange temperature measured when the air conditioner 10 repeats the normal operation and the blowing operation.

In the present embodiment, the normal operation means operating the air conditioner 10 in an operation mode (normal operation mode) of driving the fan 11 in a state in which the refrigerant is supplied to the heat exchanger 12. The normal operation includes the above-described heating operation and cooling operation.

In contrast, the blowing operation means operating the air conditioner 10 in the operation mode (blowing operation mode) of driving the fan 11 in a state in which the refrigerant is not supplied to the heat exchanger 12 as described above.

By the way, when the above-described normal operation (in this example, the heating operation) and the blowing operation are repeated in the air conditioner 10, the heat exchange temperature transitions as shown in FIG. 5. More specifically, the heat exchange temperature remains high during the heating operation. However, when the heating operation is switched to the blowing operation, the air (wind) taken into the duct 17 by driving the fan 11 comes into contact with the exchanger 12 and the heat exchange temperature is thereby lowered. In this case, the heat exchange temperature becomes gradually close to the installation environment temperature in accordance with elapse of the time. The installation environment temperature is equivalent to the temperature of the air taken into the air conditioner 10 (indoor unit 10a), i.e., the temperature of the room where the air conditioner 10 air-conditions (i.e., the environment in which the indoor unit 10a is installed). The installation environment is also affected by the temperature of the body of the device and the temperature of the body of the building, depending on the installation environment.

It is assumed here that the filter 15 is clogged (i.e., dirt such as dust is accumulated on the filter 15). In this case, even when the fan 11 is driven, the amount of the air taken into the duct 17 is reduced as compared with the state where the filter 15 is not clogged. In other words, when the filter 15 is clogged, the flow of air in the duct 17 is suppressed, and the contact of air with the heat exchanger 12 is blocked. In this case, since the temperature of the heat exchanger 12 is hardly lowered, the transition of the heat exchange temperature changes as compared with that in FIG. 2, for example, the response waveform shown in FIG. 2 extends.

In the present embodiment, based on such a viewpoint, when the inspection operation mode is set, the supply of heat (refrigerant) to the heat exchanger 12 is cut off, the blowing operation of the air conditioner 10 is performed, and the clogging of the filter 15 which results from the reduction of the amount of air is inspected by measuring the transition (step response) of the heat exchange temperature during the blowing operation.

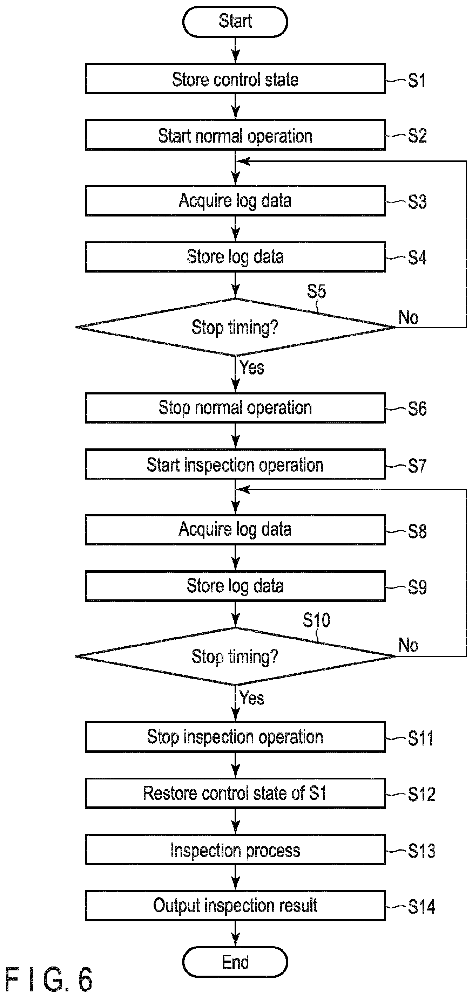

An example of the processing procedure of the air conditioning control device 20 according to the present embodiment will be described below with reference to the flowchart of FIG. 6. The processing in a case of operating the air conditioner 10 in the inspection operation mode (i.e., a case of inspecting the clogging of the filter 15 provided in the air conditioner 10 will be mainly described.

The processing of FIG. 6 is performed when, for example, the inspection operation mode is set as the operation mode of the air conditioner 10. The inspection operation mode may be set by an operation (for example, an operation of pressing a predetermined button) performed by the manager of the air conditioner 10 with respect to the air conditioning control device 20 or may be automatically set at a predetermined time.

When the inspection operation mode is set as the operation mode of the air conditioner 10 as described above, the operation control module 21 temporarily stores the control state of the air conditioner 10 obtained immediately before the inspection operation mode is set (step S1). The control state of the air conditioner 10 may be transmitted from the air conditioner 10 to the air conditioning control device 20 or may be managed in the air conditioning control device 20 (operation control module 21).

Next, the operation control module 21 controls the operation of the air conditioner 10 and starts the normal operation (for example, heating operation) (step S2).

The temperature sensor 16 provided in the air conditioner 10 sequentially measures the heat exchange temperature. For example, when the inspection operation mode is set, the temperature data indicating the heat exchange temperature is sequentially transmitted from the air conditioner 10 to the air conditioning control device 20.

The log acquisition module 22 thereby receives the temperature data indicating the heat exchange temperature measured by the temperature sensor 16 during the normal operation from the air conditioner 10, and acquires the log data including the temperature data and the time (time stamp) at which the heat exchange temperature is measured (step S3).

In the present embodiment, the heat exchange temperature may be, for example, the surface temperature of the heat exchanger 12 or the temperature of air (heat medium) blown out from the air conditioner 10 (indoor unit 10a) (hereinafter referred to as a blowout temperature). When the heat exchange temperature is the surface temperature of the heat exchanger 12, the temperature sensor 16 may be arranged on the surface of the heat exchanger 12. In addition, when the heat exchange temperature is the blowout temperature, the temperature sensor 16 may be provided at a position (i.e., a blowout port) where the air is blown out from the air conditioner 10.

Furthermore, when the blowout temperature is measured by the temperature sensor 16 as described above, the blowout temperature is corrected based on the temperature of the air taken into the air conditioner 10 (indoor unit 10a) (hereinafter referred to as an intake temperature). The intake temperature corresponds to the temperature of air obtained before heat exchange. In such a configuration, the temperature sensor 16 is provided at each of the position where the air is blown out from the air conditioner 10 and the position where the air is taken into the air conditioner 10 (i.e., the intake port), and a difference between the blowout temperature and the intake temperature can be considered as a heat exchange temperature (i.e., the heat exchange temperature = blowing temperature - intake temperature). The difference between the blowout temperature and the intake temperature may be calculated on the air conditioner 10 side or the air conditioning control device 20 side.

Incidentally, the time included in the log data (the time when the heat exchange temperature is measured) may be transmitted from the air conditioner 10 together with the temperature data or may be acquired in the air conditioning control device 20 when the temperature data is received.

The log data acquired in step S3 is stored in the storage 23 (step S4). In the following description, the log data stored in the storage 23 in step S4 (i.e., the log data acquired during the normal operation) is referred to as log data in the normal operation for convenience.

When the process of step S4 is performed, it is determined whether the stop timing of the normal operation has come or not (step S5). In step S5, for example, when a predetermined time has elapsed after the normal operation is started, it is determined that the stop timing of the normal operation has come. Incidentally, in a case where the normal operation is the heating operation as described above, when the heat exchange temperature indicated by the temperature data included in the log data acquired in step S3 is higher than or equal to a predetermined value (i.e., a value outside the range of the predetermined value), it may be determined that the stop timing of the normal operation (heating operation) has come.

When it is determined that the stop timing of the normal operation has not come (NO in step S5), the flow returns to step S3 and the processing is repeated.

In contrast, when it is determined that the stop timing of the normal operation has come (YES in step S5), the operation control module 21 controls the operation of the air conditioner 10 and stops the normal operation (step S6).

When the process of step S6 is performed, the operation control module 21 controls the operation of the air conditioner 10 and starts the inspection operation (step S7). Incidentally, in the present embodiment, the inspection operation is the blowing operation as described above.

Next, the log acquisition module 22 receives from the air conditioner 10 temperature data indicating the heat exchange temperature measured by the temperature sensor 16 during the blowing operation, and acquires log data including the temperature data and the time when the heat exchange temperature is measured (step S8). Incidentally, the process of step S8 is similar to the above-described process of step S3 and its detailed descriptions will be omitted here.

The log data acquired in step S8 is stored in the storage 23 (step S9). Incidentally, in the following descriptions, the log data stored in the storage 23 in step S9 (i.e., the log data acquired during the inspection operation) is referred to as log data in the inspection operation for convenience.

When the process of step S9 is performed, it is determined whether the stop timing of the inspection operation (blowing operation) has come or not (step S10). In step S10, for example, when a predetermined time elapses after the inspection operation is started, it is determined that the stop timing of the inspection operation has come.

When it is determined that the stop timing of the inspection operation has not come (NO in step S10), the flow returns to step S8 and the processing is repeated.

In contrast, when it is determined that the stop timing of the inspection operation has come (YES in step S10), the operation control module 21 controls the operation of the air conditioner 10 and stops the inspection operation (step S11).

When the process of step S11 is performed, the operation control module 21 cancels the setting of the inspection operation mode and restores the control state (i.e., the control state before the inspection operation mode) stored in step S1 (step S12). More specifically, the operation control module 21 restarts the operation of the air conditioner 10 in accordance with the control state stored in step S1.

As described above, in the present embodiment, the log data including the temperature data indicating the heat exchange temperature while the inspection operation mode is set and the time when the heat exchange temperature is measured can be acquired and accumulated in the storage 23.

Incidentally, the above-described (set of) heating operation and inspection operation may be repeated multiple times. In this case, for example, the processes of steps S2 to S11 may be repeatedly executed until the heating operation and the inspection operation are repeated a predetermined number of times.

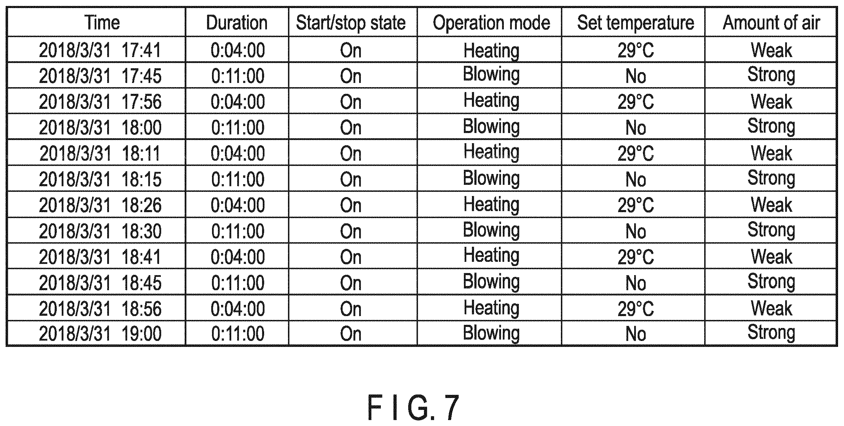

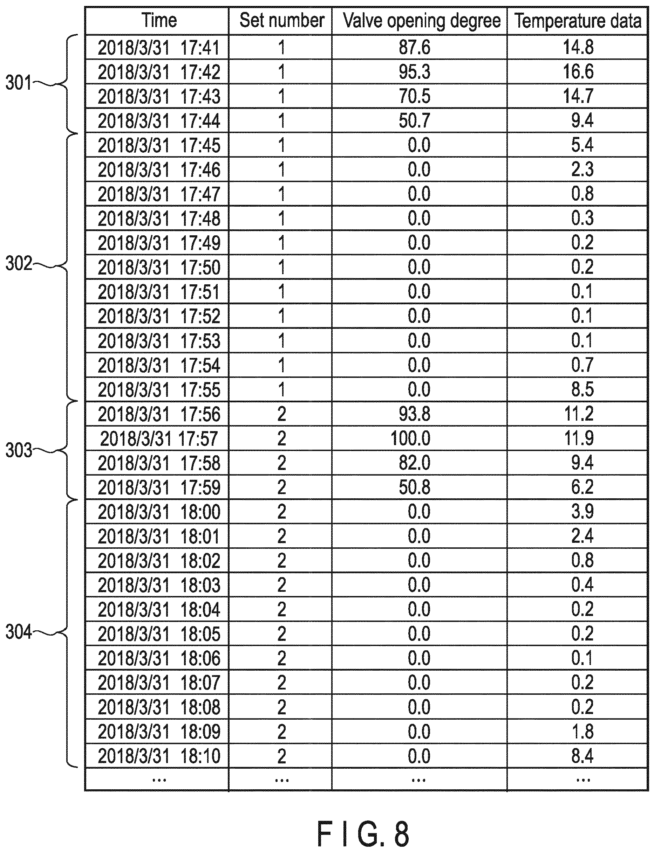

The log data acquired while the inspection operation mode is set will be described with reference to FIG. 7 and FIG. 8.

FIG. 7 shows an example of an operation schedule of the air conditioner 10 when setting the inspection operation mode. In FIG. 7, an example in which the normal operation started in step S2 is the heating operation is shown.

In the example shown in FIG. 7, the operation schedule in which one heating operation and one inspection operation are handled as one set and the heating operation and the inspection operation are continuously repeated for six sets is shown. That is, the heating operation and the inspection operation are alternately repeated six times in the operation schedule shown in FIG. 7.

Incidentally, in the example shown in FIG. 7, the duration of one heating operation (the duration of the heating operation) is 4 minutes, and the duration of one inspection operation (the duration of the inspection operation) is 11 minutes. That is, the operation of the air conditioner 10 is performed while a total of 15 minutes, of the heating operation for 4 minutes and the inspection operation for 11 minutes, is handled as one set.

In addition, in the example shown in FIG. 7, the set temperature for heating operation is set to "29°C" and the amount of air is set to "weak". Furthermore, the amount of air of the inspection operation (blowing operation) is set to "strong". It is assumed that the set temperature and the amount of air of the heating operation and the amount of air of the inspection operation are set in advance.

In FIG. 7, the example in which the heating operation and the inspection operation are repeated for 6 sets in consideration of the influence of an error or the like has been described, but the number of repeated sets (the number of times) of the heating operation and the inspection operation may be other than 6.

FIG. 8 shows an example of a data structure of the log data acquired during the operation of the air conditioner 10, based on the operation schedule shown in FIG. 7.

As shown in FIG. 8, the log data includes the time, set number, valve opening degree, and temperature data in association with each other.

The time indicates the time when the heat exchange temperature is measured as described above. Incidentally, in the present embodiment, the time included in the log data may include information of year, month and day as shown in FIG. 8.

The set number is a number representing the number of times of repetitions corresponding to the operation (heating operation or inspection operation) of the air conditioner 10 when the log data is acquired in a case where the heating operation and the inspection operation are repeated as described above. More specifically, the set number included in the log data acquired during the first heating operation and inspection operation is "1". Similarly, the set number included in the log data acquired during the second heating operation and inspection operation is "2". Similarly, the log data also includes a set number indicating the number of times of repetitions, for the third and subsequent times.

When the heating operation and the inspection operation are repeated, a set number is added to the above-described log data acquired in steps S3 and S8, although the descriptions have been omitted in FIG. 6.

The valve opening degree indicates the state (opening degree) of the expansion valve 14 when the heat exchange temperature is measured. The expansion valve 14 is closed during the inspection operation (blowing operation) while the expansion valve 14 is not closed during the heating operation as described above. For this reason, the valve opening degree can be used to discriminate whether the log data is acquired during the heating operation or the log data is acquired during the inspection operation.

This valve opening degree is added to the above-described log data acquired in steps S3 and S8, although the descriptions have been omitted in FIG. 6. Incidentally, for example, the valve opening degree may be transmitted from the air conditioner 10 to the air conditioning control device 20 together with the temperature data or may be managed in the operation control module 21.

In the present embodiment, the valve opening degree is included (added) in the log data in order to discriminate whether the log data is acquired during the heating operation or the log data is acquired during the inspection operation. However, the log data may include a flag or the like indicating whether the log data is acquired during the heating operation or the log data is acquired during the inspection operation.

The temperature data indicates the heat exchange temperature measured at the associated time. Incidentally, FIG. 8 shows an example in which the difference between the blowout temperature and the intake temperature is handled as the heat exchange temperature.

In the example shown in FIG. 8, the log data acquired when the air conditioner 10 is operated according to the operation schedule shown in FIG. 7 is shown. However, four pieces of log data 301 shown in FIG. 8 correspond to the log data in the first set (first time) of the heating operation in the operation schedule shown in FIG. 7. In addition, eleven pieces of log data 302 shown in FIG. 8 correspond to the log data in the first set (first time) of the inspection operation.

Furthermore, four pieces of log data 303 shown in FIG. 8 correspond to the log data in the second set (second time) of heating operation. In addition, eleven pieces of log data 304 shown in FIG. 8 correspond to the log data in the second set (second time) of the inspection operation.

That is, FIG. 8 shows an example in which the log data is acquired every 1 minute during the heating operation and the inspection operation.

In FIG. 8, only the log data acquired during the first set and the second set of the heating operation and the inspection operation are shown, and the log data acquired during the third and subsequent sets of the heating operation and the inspection operation are omitted.

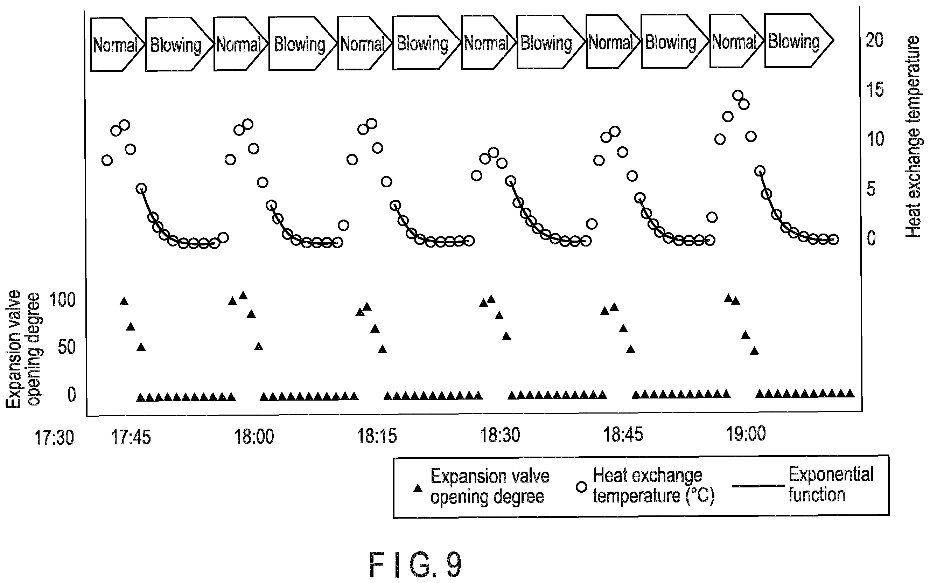

Incidentally, FIG. 9 shows the transition of the heat exchange temperature indicated by the temperature data included in the log data (log data shown in FIG. 8) acquired when the air conditioner 10 is operated according to the operation schedule shown in FIG. 7 and the transition of the valve opening degree (expansion valve opening degree) included in the log data.

According to the example shown in FIG. 9, it is shown that the heat exchange temperature is attenuated at the timing of switching from the normal operation (heating operation) to the inspection operation (blowing operation) and has converged after the elapse of a predetermined time.

In addition, the valve opening degree in the normal operation is 0 or more (i.e., valve opening > 0), and the valve opening degree in the inspection operation is 0 (i.e., valve opening degree = 0).

The descriptions will return to FIG. 6 again. The inspection processing module 24 performs a process for inspecting the clogging of the filter 15 (hereinafter referred to as an inspection process), based on the log data stored in the storage 23 (step S13).

In this inspection process, the clogging of the filter 15 is inspected by calculating the feature amount related to the clogging of the filter 15 from the log data stored in the storage 23 and comparing the calculated feature amount with the feature amount at a reference time. Incidentally, the feature amount at the reference time corresponds to the feature amount calculated from the log data acquired by setting the inspection operation mode in the air conditioner 10 at the reference time.

The inspection process will be described below in detail. In the present embodiment, it is assumed that the time constant of the heat exchange temperature is used as the above-described feature amount related to the clogging of the filter 15.

In this case, the inspection processing module 24 identifies one set of log data (for example, log data including the set number "1"), based on the set number included in the log data stored in the storage 23. Incidentally, when only one set of log data is stored in the storage 23, all the log data stored in the storage 23 may be specified.

The log data in the heating operation and the log data in the inspection operation are included in the above-described one set of log data. However, the inspection processing module 24 specifies (cuts out) the log data in the inspection operation, based on the valve opening degree included in the one set of log data. More specifically, the inspection processing module 24 specifies the log data having a valve opening degree of 0, of the one set of log data, as the log data in the inspection operation.

In the present embodiment, the blowing operation is performed after the normal operation. However, since new heat (refrigerant) is not supplied to the heat exchanger 12 during the blowing operation, heat is taken away from the heat exchanger 12 by constant wind (blowing). Therefore, the heat exchange temperature in the inspection operation (blowing operation) is exponentially attenuated as shown in FIG. 9.

For this reason, the inspection processing module 24 calculates three unknown parameters $T_0$, $T_\infty$, and $\tau$ by referring to the specified log data in the inspection operation as yt, and approximating the log data yt by the following exponential function (hereinafter referred to as equation (1)).

$$y_t = (T_0 - T_\infty) \exp (-t/\tau) + T_\infty \qquad \text{Equation (1)}$$

t is the time based on the inspection operation start time. $T_0$ is the heat exchange temperature (initial temperature) obtained at the inspection operation start time, i.e., when the time t is 0. In addition, $T_\infty$ is the heat exchange temperature (terminal temperature) obtained when the time t is $\infty$. In addition, $\tau$ is a time constant of the heat exchange temperature.

In the equation (1), the time constant is the time when the temperature decreases by approximately 63% from the initial stage. When the amount of air decreases due to the clogging of the filter 15, the waveform of the heat exchange temperature is lengthened and the time constant increases. Incidentally, when the heat exchange temperature is the difference between the blowout temperature and the intake temperature as described above, it may be assumed that $T_\infty=0$.

One time constant $\tau$ can be calculated for, for example, one set of log data (log data including the same set number) by using the above equation (1). In other words, when a plurality of sets of the normal operation and the inspection operation are repeatedly performed as described above, the time constant $\tau$ is calculated for each set.

In the present embodiment, the time constant $\tau$ calculated by using the above equation (1) is used as the feature amount related to the clogging of the filter 15. However, a constant other than the time constant may be used as the feature amount related to the clogging of the filter 15 obtained from the above-described log data. The feature amount other than the time constant is, for example, a terminating temperature $T_\infty$, a combined variable of the time constant and the terminating temperature, a degree of deviation from a characteristic waveform extracted by the Shapelets method or the like.

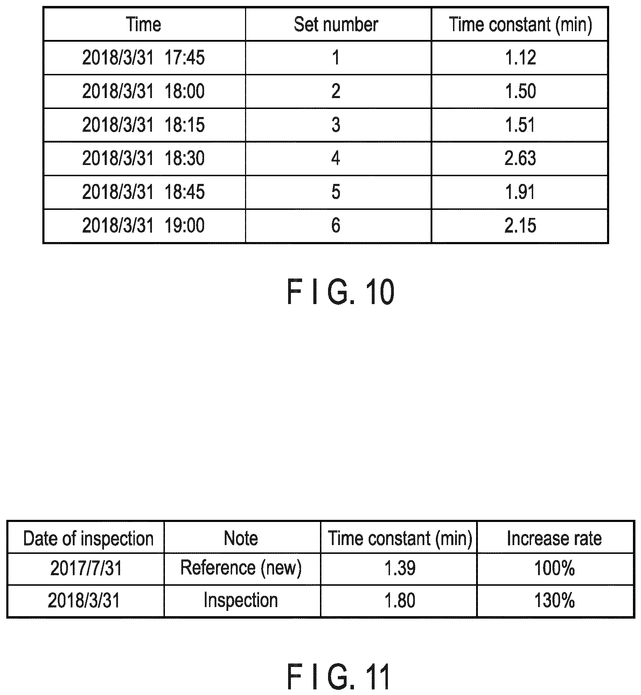

FIG. 10 shows an example of the time constant calculated based on the log data shown in FIG. 8. In the example shown in FIG. 10, the time constants (minutes) calculated based on the log data (heat exchange temperature) including the same set numbers shown in FIG. 8 are shown for each of the set numbers.

Incidentally, the time shown in FIG. 10 indicate the earliest time (inspection operation start time) of the times included in the log data in the inspection operation including the corresponding set number.

In the inspection process, when the time constant calculated as described above (hereinafter referred to as the time constant at the time of inspection) and the time constant at the reference time are compared and the difference between the time constant at the time of inspection and the time constant at the reference time is larger than or equal to a predetermined value, an inspection result that the filter 15 is clogged is obtained. In constant, when the difference between the time constant at the time of inspection and the time constant at the reference time is not larger than or equal to a predetermined value, an inspection result that the filter 15 is not clogged is obtained. It is assumed that the time constant at the reference time is prepared in advance and is managed in, for example, the air conditioning control device 20 (inspection processing module 24).

Incidentally, when the time constant is calculated for each set (number) as shown in FIG. 10, the representative value (for example, average value) of the time constant calculated for each set is set as the time constant at the inspection. Incidentally, the minimum value or the maximum value of the time constants calculated for each set may be used as the time constant at the inspection.

The time constant at the reference time may differ depending on the installation environment of the air conditioner 10 (indoor unit 10a) including the heat insulation performance, etc., of the building (structure). In this case, for example, even when the difference between the time constant at the time of inspection and the time constant at the reference time is the same value, the influence given to the inspection result by the difference is varied according to a case where the time constant at the reference time is relatively small or a case where the time constant at the reference time is relatively large.

Thus, for example, as shown in FIG. 11, when the increase rate of the current time constant with respect to the time constant at the reference time is larger than or equal to a predetermined value, the inspection result that the filter 15 is clogged may be obtained. In FIG. 11, the time constant at the reference time is 1.39, and the time constant at the time of inspection is 1.80, which means that the increase rate of the time constant at the time of inspection is 130% with respect to the time constant at the reference time. If the increase rate is larger than or equal to a predetermined value, the inspection result that the filter is clogged can be obtained.

Incidentally, in the present embodiment, the reference time is assumed to be a time when the air conditioner 10 is new, and includes, for example, a time when the air conditioner 10 is first energized. Incidentally, the reference time may be any time when the filter 15 is not clogged, and may be, for example, when the filter 15 is cleaned or replaced. Furthermore, since the above-described feature amount (time constant) related to the clogging of the filter 15 changes according to the installation environment of the air conditioner 10, the reference time may be the time when the installation place of the air conditioner 10 is changed to a place where the heat load is different (i.e., the time when the construction environment is changed) or the like.

As described above, according to the inspection process of the present embodiment, the clogging of the filter 15 can be inspected based on the log data in the inspection operation.

The descriptions will return to FIG. 6 again. When the process of step S13 is performed, the result of the process (i.e., the inspection result) is output (step S14).

Incidentally, the inspection result includes the fact that the filter 15 is clogged or the filter 15 is not clogged, as described above. However, the inspection result that the filter 15 is clogged is included may be output as an alert to, for example, an output device provided in the air conditioning control device 20. When the output device is a display or the like, the inspection result can be displayed on the display. In addition, when the output device is an indicator light, the indicator light can be turned on. According to this, for example, an administrator or the like who manages the air conditioner 10 can be notified of the clogging of the filter 15.

In addition, the inspection result may be output to, for example, the air conditioner 10. Furthermore, the inspection result may be output to a server device installed in a support center that monitors the air conditioner 10 via a network or the like. According to this, for example, the user (the person in the room) using the air conditioner 10 or the support center can be notified of the clogging of the filter 15.

Incidentally, in FIG. 6, the normal operation (heating operation) is performed before the inspection operation. For example, however, when the normal operation is performed before the inspection operation mode is set, the normal operation does not need to be performed again before the inspection operation, and the inspection operation may be started immediately after the inspection operation mode is set. In this case, the processes of steps S2 to S6 shown in FIG. 6 may be omitted.

In addition, the control state of the air conditioner 10 is stored in step S1 shown in FIG. 6. It may be determined whether or not the processes of steps S2 to S6 are performed or not, based on the control state. That is, when the start/stop state of the air conditioner 10 included in the control state stored in step S1 is Off (i.e., the power supply of the air conditioner 10 has been turned off when the inspection operation mode is set), the processes of steps S2 to S6 may be performed to preheat the heat exchanger 12. In contrast, when the operation mode included in the control state stored in step S1 is the heating operation mode (i.e., the heating operation mode is set as the operation mode of the air conditioner 10 at the time when the inspection operation mode is set), the processes of steps S2 to S6 may be omitted.

Incidentally, in FIG. 6, the log data is acquired while the inspection operation mode is set (during the normal operation and the inspection operation), and the log data in inspection operation is cut out from the log data in the inspection process. In the inspection process, however, since the log data in the inspection operation only needs to be present, the log data may not be acquired during the normal operation. In this case, the processes of steps S3 and S4 shown in FIG. 6 may be omitted.

In addition, in the present embodiment, the clogging of the filter 15 is inspected with the time constant of the heat exchange temperature as described above. For this reason, in step S10 shown in FIG. 6, for example, when it is determined that the heat exchange temperature has converged based on the transition of the heat exchange temperature indicated by the temperature data included in the log data acquired in step S8, it may be determined that the stop timing of the inspection operation has come. Incidentally, the fact that the heat exchange temperature has converged can be determined based on the fact that, for example, the difference between the heat exchange temperatures indicated by the temperature data included in the plurality of log data acquired immediately before is smaller than or equal to a predetermined value.

Furthermore, the case where the normal operation is the heating operation in the present embodiment has been mainly described. However, the normal operation may be the cooling operation.

Incidentally, when the inspection operation (blowing operation) is performed after the cooling operation, the heat exchange temperature in the cooling operation remains low. However, when the cooling operation is switched to the inspection operation, the air taken into the duct 17 by driving the fan 11 comes into contact with the heat exchanger 12, and the heat exchange temperature thereby rises.

That is, in a case where the heating operation is performed as the normal operation when the inspection operation mode is set, the clogging of the filter 15 is inspected with the time constant obtained when the heat exchange temperature is attenuated. When the cooling operation is performed as the normal operation, the clogging of the filter 15 is inspected with the time constant obtained when the heat exchange temperature rises. Incidentally, since the operation of the air conditioning control device 20 other than this point is the same as that in the case where the normal operation is the heating operation, detailed descriptions thereof will be omitted here.

In addition, in the process shown in FIG. 6, the heating operation is started in step S2. However, it may be determined whether the heating operation or the cooling operation is started in step S2, based on the control state stored in step S1 as described above. More specifically, if the operation mode included in the control state stored in step S1 is the heating operation mode (i.e., the heating operation mode is set as the operation mode of the air conditioner 10 at the time when the inspection operation mode is set), the heating operation may be started in step S2. If the operation mode included in the control state is the cooling operation mode (i.e., the cooling operation mode is set as the operation mode of the air conditioner 10 at the time when the inspection operation mode is set), the cooling operation may be started in step S2.

In addition, whether to start the heating operation or the cooling operation in step S2 may be determined based on the temperature of the room in which the air conditioner 10 performs air conditioning or the like.

As described above, in the present embodiment, the inspection operation (blowing operation) in which the fan 11 is driven in a state where the refrigerant is not supplied to the heat exchanger 12 is performed, the log data including the temperature data indicating the temperature (heat exchange temperature) regarding the heat exchanger 12 measured by the temperature sensor 16 during the inspection operation and the time when the temperature is measured is acquired, and the clogging of the filter 15 is inspected based on the acquired log data.

In the present embodiment, with the configuration described above, the administrator who manages the air conditioner 10 or the user who uses the air conditioner 10 can easily determine the timing of cleaning or replacing the filter 15, based on the inspection result of the clogging of the filter 15.

In addition, in the present embodiment, since sensors other than the temperature sensor 16 for measuring the heat exchange temperature do not need to be used, the air conditioning control device 20 according to the present embodiment can be realized at low costs.

Furthermore, in the present embodiment, since the blowing operation performed as the inspection operation can be performed by simple control that does not operate the refrigerant circuit, various factors that hinder the inspection are less likely to be mixed, which is considered suitable for analyzing static troubles such as the clogging of the filter 15.

In the present embodiment, the normal operation (heating operation or cooling operation) of driving the fan 11 in the state of supplying the refrigerant to the heat exchanger 12 is performed before the inspection operation is performed.

In the present embodiment, the clogging of the filter 15 can be inspected (whether the clogging of the filter 15 has occurred or not can be determined) by using the time constant as the feature amount related to the clogging of the filter 15 based on the log data, and comparing the time constant (first time constant) of the heat exchange temperature at the time of inspection with the time constant (second time constant) at the reference time which is prepared in advance. According to the above-described configuration, since the heat exchange temperature can be raised or lowered by performing the normal operation before the inspection operation, the log data useful for calculating the time constant can be acquired.

Incidentally, after the normal operation (in this example, the heating operation) is started as described above, the inspection operation may be performed when the heat exchange temperature measured by the temperature sensor 16 is higher than or equal to a predetermined value. According to such a configuration, for example, although the heat exchange temperature is not raised or lowered to a required temperature, the inspection operation is started and a situation in which useful log data cannot be acquired can be avoided. Incidentally, in the cooling operation, the inspection operation may be performed when the heat exchange temperature is lower than or equal to a predetermined value. That is, in the present embodiment, the inspection operation may be performed when the heat exchange temperature is out of the range of the predetermined value.

In addition, in the present embodiment, the temperature sensor 16 is arranged on the surface of the heat exchanger 12, and the surface temperature of the heat exchanger 12 is referred to as the heat exchange temperature. In such a configuration, the heat exchange temperature can be measured with high accuracy, and the inspection accuracy for the clogging of the filter 15 can be improved.

Incidentally, the temperature sensor 16 may be provided at the outlet of the air conditioner 10. In this case, the temperature of the air (heat medium) blown out from the air conditioner 10 is used as the heat exchange temperature. According to such a configuration, even a person other than a trader who cannot measure the surface temperature of the heat exchanger 12 (i.e., cannot attach the temperature sensor 16 to the surface of the heat exchanger 12) can inspect the clogging of the filter 15 in the air conditioning control device 20 according to the present embodiment.

Furthermore, a first temperature sensor may be provided at the air blowout port of the air conditioner 10 (indoor unit 10a), and a second temperature sensor may be provided at the air intake port of the air conditioner 10 (indoor unit 10a), as the temperature sensor 16 in the present embodiment. According to such a configuration, by using the temperature (for example, blowout temperature-intake temperature) based on the temperature (blowout temperature) measured by the first temperature sensor and the temperature (intake temperature) measured by the second temperature sensor as the heat exchange temperature, the above-mentioned blowout temperature can be corrected by the intake temperature (i.e., the air temperature before the heat exchange), and the temperature data (log data) indicating the highly accurate heat exchange temperature can be acquired.

In addition, in the present embodiment, by alternately repeating the normal operation and the inspection operation, log data including a set number representing the number of times of repetition is acquired for each of the repeated inspection operations, and time constant of the heat exchange temperature based on the log data is calculated for each set number included in the acquired log data. According to this, the clogging of the filter 15 can be inspected by comparing the average value of the plurality of time constants calculated for each set number with the time constant at the reference time, and the influence of the error of the heat exchange temperature in one set of log data can be mitigated.

In the configuration in which the normal operation and the inspection operation are alternately repeated as described above, the clogging of the filter 15 is inspected from a plurality of time constants calculated for each set number. When this inspection is performed, for example, the Wilcoxon signed-rank test may be used. This is one of the test methods for the average value of the population that is not necessarily a normal distribution. For example, this method is used to intervene subjects and test whether the average scores of the subject groups are different before and after the intervention, in the measured scores. In the present embodiment, the intervention corresponds to the difference (decrease) in the amount of air, the subject number corresponds to the set number, and the score corresponds to the time constant.

The influence of the heating operation remains around the heat exchanger 12 immediately after performing the normal operation (for example, the heating operation or the like). By using the Wilcoxon signed-rank test for the results of repeated inspection operations (time constants at the time of inspection), it can be tested whether or not there is a significant difference in the average value of the time constants in consideration of the influence of normal operation performed immediately before each inspection operation.

That is, it is tested whether there is a significant difference between the time constants at the reference time (lists with set numbers of the time constants at the reference time) prepared in advance, which correspond to each set number, and the time constants at the time of inspection calculated for each set number (lists with set numbers of the time constants at the inspection time). If there is a significant difference, the inspection result that the filter 15 is clogged can be obtained.

The use of the Wilcoxon signed-rank test has been described here. For example, however, the other processing may be performed in the configuration of inspecting the clogging of the filter 15 by comparing the time constant at the time of inspection (first time constant) calculated for each set number and the time constant at the reference time corresponding to the set number (second time constant).

In addition, in the present embodiment, the expansion valve 14 is controlled to be closed in the inspection operation, and the log data including the opening degree of the expansion valve 14 (valve opening degree) is acquired. In the present embodiment, with such a configuration, the log data in the inspection operation can be specified based on the opening degree of the expansion valve 14 included in the log data, and the clogging of the filter 15 can be inspected based on the log data in the inspection operation.

Incidentally, the inspection operation (blowing operation) can be performed even in the configuration of stopping the compressor 13 instead of closing the expansion valve 14. For this reason, in the present embodiment, the log data including the operation amount (number of revolutions) of the compressor 13 may be acquired instead of the opening degree of the expansion valve 14. Even in such a configuration, the log data in which the number of revolutions of the compressor 13 is 0 can be specified as the log data in the inspection operation.

By the way, the opening degree of the expansion valve 14 included in the log data is generally a control value for controlling the expansion valve 14. Therefore, even when the opening degree of the expansion valve 14 included in the log data is 0, there may be a time lag before the expansion valve 14 is closed. In this case, since the heat (refrigerant) continues to flow into the heat exchanger during the time lag, the heat exchange temperature at the initial stage of the inspection operation may not be properly measured.

In contrast, for example, in the case of a refrigerant circuit of a type in which the indoor unit 10a and the outdoor unit 10b correspond in a one-to-one relationship as shown in FIG. 2, the heat capacity is often small and it is necessary to recognize in units of seconds whether or not the refrigerant is supplied to the heat exchanger 12 provided in the indoor unit 10a. In addition, for example, the expansion valve 14 of the indoor unit 10a in the heating operation is provided at a position after the refrigerant has passed through the heat exchanger 12. For this reason, in the above-described refrigerant circuit of the type in which the indoor unit 10a and the outdoor unit 10b correspond in the one-to-one relationship, the operating amount (operating state) of the compressor 13 is used rather than the opening degree of the expansion valve 14. In such a refrigerant circuit, it is advantageous to use the operating amount of the compressor 13 even in the point that the pipe is relatively short. Incidentally, the air conditioner 10 forming this type of refrigerant circuit is, for example, a room air conditioner or the like.

In the present embodiment, the clogging of the filter 15 can be inspected by performing the above-described processing shown in FIG. 6 described above. The air conditioning control device 20 sequentially monitors the control state of the air conditioner 10 while the processes in steps S2 to S11 shown in FIG. 6 are performed. According to this, for example, when the control state of the air conditioner 10 is changed by the user's operation of a remote controller or the like, the processing (for example, inspection operation) shown in FIG. 6 can be suspended and the setting of the inspection operation mode can be canceled. In other words, even when the inspection operation mode is set and the inspection operation is started, the inspection operation may be stopped when the control state of the air conditioner 10 becomes an unsteady state.

In such a configuration, it is possible to avoid obtaining an erroneous inspection result based on the log data of an operation different from the inspection operation in the inspection operation mode.

It has been described here that the inspection operation is stopped when the control state of the air conditioner 10 becomes an unsteady state. For example, however, the inspection operation may also be stopped when the defrosting operation or the oil recovery operation is performed and the state of the refrigerant circuit thereby becomes an unsteady state. Incidentally, the information indicating the state of the refrigerant circuit can be acquired from the air conditioner 10.

In addition, when the state of the air conditioner 10 or the refrigerant circuit becomes an unsteady state, the inspection process may be performed with the only log data acquired during a period other than the period in which the state is the unsteady state by holding a flag indicating that the state is the unsteady state, or the like, along with the time.

In addition, it has been described that the processing shown in FIG. 6 is performed when the inspection operation mode is set according to, for example, the administrator's operation on the air conditioning control device 20, or the like. However, the timing when the inspection operation mode is set may be the other timing.

More specifically, for example, if the air conditioner 10 is installed in an office building or the like and if the air conditioning control device 20 is capable of acquiring the information indicating the employee's office attendance time, leaving time, etc., from a database or the like that manages the attendance status of the employee working in the office, a time zone before the employee attends the office after the employee leaves the office may be determined and the inspection operation mode may be set in the time zone. That is, in the present embodiment, the time zone in which the inspection operation is performed may be determined based on the management status of the building in which the air conditioner is installed. According to such a configuration, for example, since performing the inspection operation (blowing operation) against the intention of the person in the room can be avoided, the comfort of the person in the room can be maintained and reduction of peak power consumption at the time of attending an office, etc., can be expected.

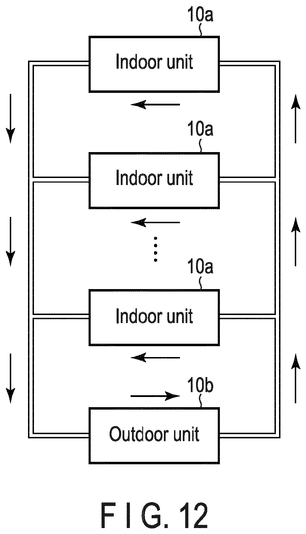

In addition, in the present embodiment, the air conditioner 10 including one indoor unit 10a and one outdoor unit 10b as shown in FIG. 2 has been described. However, the present embodiment may also be applied to an air conditioner 10 (refrigerant circuit) provided with a plurality of indoor units 10a and one outdoor unit 10b as shown in FIG. 12.

Incidentally, the air conditioner 10 (air conditioning system) capable of controlling a plurality of indoor units 10a with one refrigerant circuit as shown in FIG. 12 is referred to as a multi-air conditioner. In this case, each of the plurality of indoor units 10a includes the fan 11, the heat exchanger 12, the expansion valve 14, the filter 15, and the like.

In addition, in the refrigerant circuit shown in FIG. 12, the refrigerant is supplied to each indoor unit 10a (heat exchanger 12) through a pipe that branches in parallel on the way. Incidentally, the outline of heat exchange in each indoor unit 10a has been described with reference to FIG. 3.

The air conditioner 10 including a plurality of indoor units 10a and one outdoor unit 10b as shown in FIG. 12 is hereinafter referred to as a multi-air conditioner type air conditioner 10.

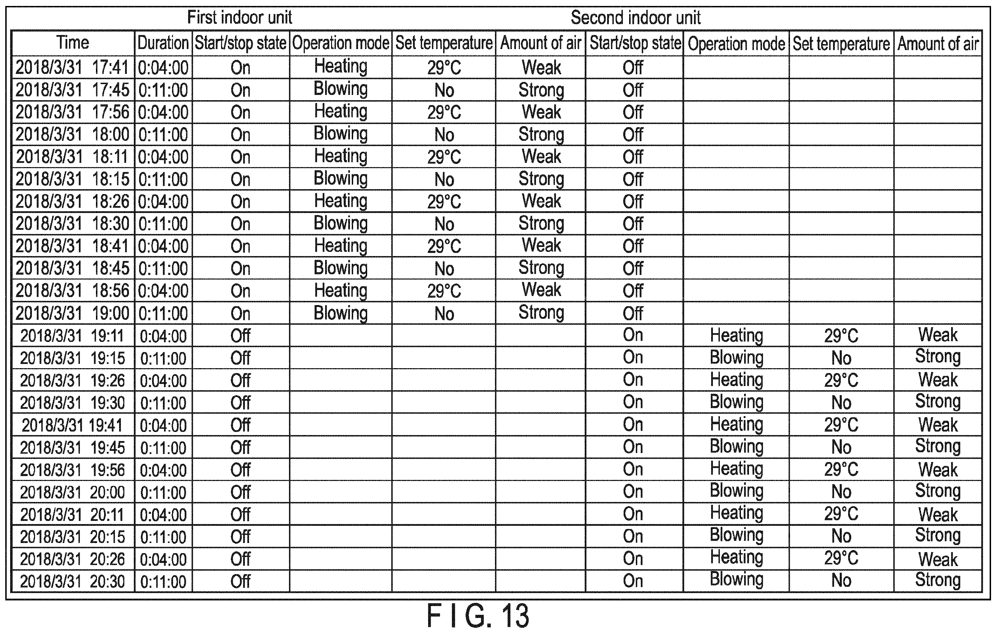

FIG. 13 shows an example of the operation schedule of the multi-air conditioner type air conditioner 10 when the inspection operation mode is set. In FIG. 13, the operation schedule of the multi-air conditioner type air conditioner 10 including two indoor units 10a is shown for convenience. Two indoor units 10a provided in the multi-air conditioner type air conditioner 10 are referred to as a first indoor unit 10a and a second indoor unit 10a, respectively.

For example, when the first indoor unit 10a is operated in the inspection operation mode and the second indoor unit 10a is operated (i.e., the second indoor unit 10a is working), the compressor 13 provided in the outdoor unit 10b may work regardless of a request of the first indoor unit 10a. In this case, even if the expansion valve 14 provided in the first indoor unit 10a is closed, the pressure of the refrigerant changes and an influence that the temperature (heat exchange temperature) of the heat exchanger 12 provided in the first indoor unit 10a fluctuates or the like occurs.

For this reason, for example, when the first indoor unit 10a is operated in the inspection operation mode, the start/stop state of the second indoor unit 10a is set to Off (i.e., the operation of the second indoor unit 10a is stopped). Similarly, when the second indoor unit 10a is operated in the inspection operation mode, the start/stop state of the first indoor unit 10a is set to Off (i.e., the operation of the first indoor unit 10a is stopped).

In the example shown in FIG. 13, the start/stop state of the second indoor unit 10a is Off during a period from 17:41 to 19:11 when the first indoor unit 10a operates in the inspection operation mode. Similarly, the start/stop state of the first indoor unit 10a is Off during a period from 19:11 to 20:41 when the second indoor unit 10a operates in the inspection operation mode.

According to this, the temperature of the heat exchanger 12 provided in the indoor unit 10a subjected to the inspection operation can be prevented from fluctuating by operating the indoor units 10a other than the indoor unit 10a subjected to the inspection operation.

Incidentally, it has been described that the operation of the other indoor unit 10a is stopped while the indoor unit is operated in the inspection operation mode. However, even when the indoor unit is operated in the inspection operation mode, the other indoor unit 10a may be operated while the normal operation is performed, and the operation of the other indoor unit 10a may be stopped only when the inspection operation is performed.

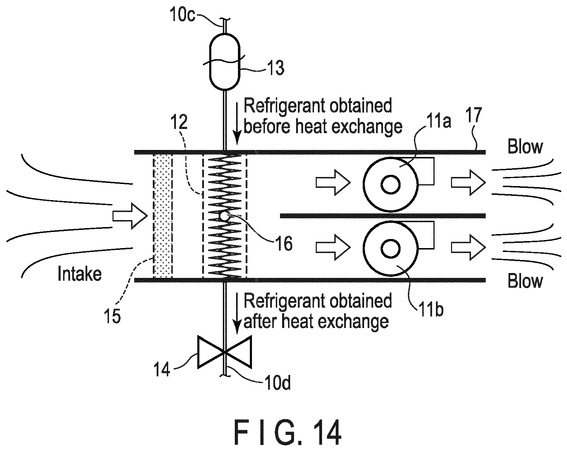

Furthermore, it has been described that, in the present embodiment, the air conditioner 10 (indoor unit 10a) includes one fan 11. However, the present embodiment may also be applied to air conditioner 10 in which the indoor unit 10a includes a plurality of fans as shown in FIG. 14. Incidentally, FIG. 14 shows an example in which the air conditioner 10 includes two fans 11a and 11b.

By the way, in a configuration including a plurality of fans, for example, the ventilation level may be controlled by the number of operating fans. More specifically, for example, only the fan 11a may be operated when the blowing level is low, and the fans 11a and 11b may be operated when the blowing level is high.

However, when the inspection operation of the air conditioner 10 is performed and when only the fan 11a of the fans 11a and 11b is operated as described in the present embodiment, wind (air) may flow backwards from the blowout port on the side of the stopped fan 11b. The air thus flowing backwards is blown out from, for example, the blowout port on the side of the fan 11a without passing through the filter 15 and the heat exchanger 12. According to this, the action of the wind that changes the heat exchange temperature cannot be effectively measured, which adversely affects the inspection of the clogging of the filter 15. This becomes more remarkable as the clogging of the filter 15 progresses.

For this reason, when the inspection operation of the air conditioner 10 is performed in the configuration in which the air conditioner 10 includes the plurality of fans 11a and 11b as described above, all of the plurality of fans 11a and 11b are set to be driven at the same number of revolutions.

In such a configuration, the heat exchange temperature can be effectively changed, and the above-described adverse effects can be avoided.

Incidentally, it has been described that the air conditioning control device 20 is a single device in the present embodiment. However, the air conditioning control device 20 may be implemented by, for example, a plurality of devices such as a device having the function of controlling the air conditioner 10 and a device including the function of inspecting the filter clogging. In this case, for example, these devices may be mounted in a microcomputer provided in the indoor unit 10a or may be mounted in a remote controller used by the user to control the air conditioner 10 or may be installed in a server device installed in a support center that monitors the air conditioner 10 via a network or the like.

Incidentally, it has been described that, in the present embodiment, the air conditioning control device 20 controlling the operation of the air conditioner 10 inspects the clogging of the filter 15 provided in the air conditioner 10 (indoor unit 10a). However, the present embodiment may be applied to a case where, for example, a refrigerant circuit control device for controlling a refrigerating device such as a refrigerating showcase inspects the clogging of a filter provided in the refrigerating device. In this case, a refrigerant circuit control device and an output device that outputs an inspection result on the filter clogging from the refrigerant circuit control device as an alert, or the like may be incorporated in the refrigerating device.

(Second Embodiment)

Next, the second embodiment will be described. In the above-described first embodiment, it has been described that the normal operation is performed before the inspection operation. The present embodiment is different from the first embodiment from the viewpoint of performing a special operation different from the normal operation (hereinafter referred to as a special operation) before the inspection operation.

Incidentally, the configuration and the like of the air conditioning control system according to the present embodiment are the same as those in the first embodiment described above, and therefore will be described with reference to FIG. 1 to FIG. 3 and the like.

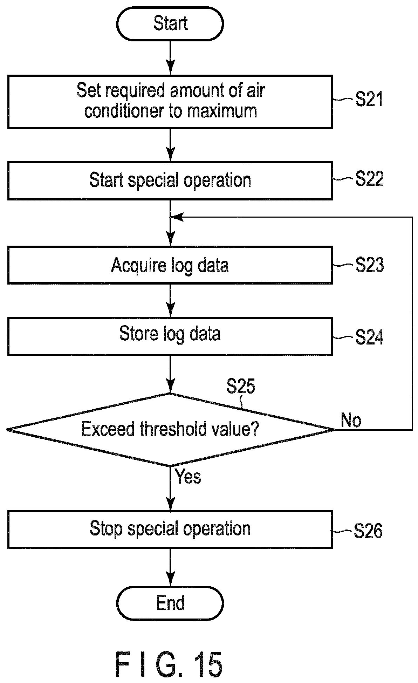

An example of a processing procedure of an air conditioning control device 20 according to the present embodiment will be described below with reference to a flowchart of FIG. 15.

Incidentally, the processes shown in FIG. 15 are processes related to the special operation performed instead of the normal operation that is performed when the inspection operation mode is set in the above-described first embodiment. In other words, the processes shown in FIG. 15 are the processes performed instead of above-described steps S2 to S5 shown in FIG. 6. Incidentally, the processes shown in FIG. 6 are performed except the processes shown in FIG. 15 performed instead of the processes of steps S2 to S6 shown in FIG. 6.

First, when the inspection operation mode is set and the process of step S1 shown in FIG. 6 is performed, the operation control module 21 sets, for example, the required heat amount of the air conditioner 10 at the time of performing the heating operation to the maximum (step S21).

Incidentally, the required heat amount of the air conditioner 10 includes the heat exchange amount in the heat exchanger 12, and setting the required heat amount to the maximum means, for example, setting the set temperature, the amount of air (number of revolutions of the fan 11) and the like at the time of performing the heating operation to maximum values.

Next, the operation control module 21 controls the operation of the air conditioner 10 based on the required heat amount (maximum) set in step S21, and starts the special operation (step S22).

When the operation of the air conditioner 10 is controlled based on the required heat amount set in step S21, for example, heat (refrigerant) is supplied to the heat exchanger 12 based on the maximum value of the set temperature, and the fan 11 is driven at the maximum number of revolutions.

However, in the special operation started in step S22, the operation of supplying heat to the heat exchanger 12 is performed with the driving of the fan 11 stopped. In other words, the special operation in the present embodiment corresponds to, for example, the heating operation in which the fan 11 is not driven.

When the process in step S22 is performed, the processes in steps S23 and S24 corresponding to the above-described processes in steps S3 and S4 shown in FIG. 6 are performed.

Next, it is determined whether the heat exchange temperature indicated by the temperature data included in the log data acquired in step S23 exceeds a predetermined value (hereinafter referred to as a threshold value) or not (step S25).

If it is determined that the heat exchange temperature does not exceed the threshold value (NO in step S25), the processing returns to step S23 and is repeated.

In contrast, when it is determined that the heat exchange temperature exceeds the threshold value (YES in step S25), the operation control module 21 controls the operation of the air conditioner 10 and stops the above-described special operation (step S26).

When the process in step S26 is performed, the processes following step S7 shown in FIG. 6 are performed.

As described above, in the present embodiment, for example, by setting the required heat amount of the air conditioner 10 at the time of performing the heating operation to the maximum, the refrigerant is supplied to the heat exchanger 12 according to the set required heat amount while the special operation of stopping the drive of the fan 11 provided in the air conditioner 10 (indoor unit 10a) is performed.

According to FIG. 9 described above, the difference in heat exchange temperature (i.e., $T_0 - T_\infty$) in a case where the inspection operation is performed after the normal operation is approximately 4°C to 7°C. In this case, when the measurement granularity of the temperature sensor 16 (temperature resolution of the temperature sensor 16) is, for example, approximately 0.5°C, the heat exchange temperature indicated by the temperature data included in the log data does not converge smoothly and a time constant of high accuracy may not be able to be measured.

In contrast, in the present embodiment, the heat exchange temperature can be raised by supplying the refrigerant to the heat exchanger 12 according to the maximum required heat amount, and the decrease in the heat exchange temperature caused by driving the fan 11 can be suppressed.

That is, in the present embodiment, since the heat exchange temperature is sufficiently increased by performing the special operation, the difference in the heat exchange temperature at the time of performing the inspection operation can be made larger, and the S / N ratio of the heat exchange temperature measurement can be thereby improved.

According to this, even when the temperature resolution of the temperature sensor 16 is low as described above, the log data (heat exchange temperature) useful for calculating a highly accurate time constant can be acquired and the improvement of inspection accuracy can be expected.

In addition, in the present embodiment, since the heat exchange temperature can be increased more efficiently than that in the above-described first embodiment, the time for operating the air conditioner 10 before the inspection operation can be shortened.

Incidentally, it has been described that, in the present embodiment, the heating operation in which the fan 11 is not driven is performed as a special operation. However, the special operation may be a cooling operation in which the fan 11 is not driven. Whether the heating operation which does not drive the fan 11 is performed or the cooling operation which does not drive the fan 11 is performed as the special operation may be determined based on the control state stored in step S1 shown in FIG. 6.

In addition, some configurations have been described as the modified examples in the above first embodiment. The present embodiment may be realized in combination with these configurations.

According to at least one embodiment described above, an air conditioning control device, a refrigerant circuit control device, an inspection method, and a program, capable of inspecting the clogging of the filter, can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

Reference Signs List

10 . . . air conditioner, 10a . . . indoor unit, 10b . . . outdoor unit, 10c and 10d . . . pipe, 11 . . . fan, 12 . . . heat exchanger, 13 ... compressor, 14 . . . expansion valve, 15 . . . filter, 16 . . . temperature sensor, 17 . . . duct, 21 ... operation control module, 22 . . . log acquisition module, 23 . . . storage, 24 . . . inspection processing module, 201 . . . CPU, 202 . . . nonvolatile memory, 203 . . . main memory, 204 . . . communication device.

## EP 3 879 197 B1

**Claims**

1. An air-conditioning control device (20) connected to an air conditioner (10) configured to adjust a temperature of air taken in via a filter (15) by driving a fan (11), by a heat exchanger (12) supplied with a refrigerant, and blow the air, the air-conditioning control device (20) comprising:

   control means configured to perform an inspection operation of the air conditioner (10) driving the fan (11) in a state in which the refrigerant is not supplied to the heat exchanger (12);
   log data acquisition means (22) configured to acquire log data (301-304) including temperature data indicating a temperature of the heat exchanger (12) measured by a temperature sensor (16) during the inspection operation and a time when the temperature is measured; and
   inspection processing means (24) configured to inspect clogging of the filter (15), based on the acquired log data (301-304);
   wherein the control means is further configured to:

   perform a normal operation of the air conditioner (10) supplying the refrigerant to the heat exchanger (12) before performing the inspection operation; and
   after starting the normal operation, the control means is configured to perform the inspection operation when the temperature related to the heat exchanger (12) measured by the temperature sensor (16) is out of a range of a predetermined value.

2. The air-conditioning control device (20) of claim 1, wherein
   the control means is further configured to set a required heat amount of the air conditioner (10) at time of performing the normal operation to maximum.

3. The air-conditioning control device (20) of claim 1, wherein
   before performing the inspection operation, the control means is further configured to supply the refrigerant to the heat exchanger (12) in accordance with a maximum required heat amount of the air conditioner (10) and perform a special operation of stopping driving the fan (11).

4. The air-conditioning control device (20) of claim 1, wherein

   the temperature sensor (16) is arranged on a surface of the heat exchanger (12), and
   the temperature related to the heat exchanger (12) is a surface temperature of the heat exchanger (12).

5. The air-conditioning control device (20) of claim 1, wherein

   the temperature sensor (16) is provided at a position where the air is blown out from the air conditioner (10), and
   the temperature related to the heat exchanger (12) is a temperature of the air blown out from the air conditioner (10).

6. The air-conditioning control device (20) of claim 1, wherein

   the temperature sensor (16) comprises a first temperature sensor provided at a position where the air is taken into the air conditioner (10), and a second temperature sensor provided at a position where the air is blown out from the air conditioner (10), and
   the temperature related to the heat exchanger (12) is a temperature based on a temperature measured by the first temperature sensor and a temperature measured by the second temperature sensor.

7. The air-conditioning control device (20) of claim 1, wherein
   after starting the inspection operation, the control means is further configured to stop the inspection operation when a control state of the air conditioner (10) becomes an unsteady state.

8. The air-conditioning control device (20) of claim 1, wherein
   the control means is further configured to acquire information indicating a management state of a building in which the air conditioner (10) is installed, and determine a time zone in which the inspection operation is to be performed based on the management state of the building.

**9.** The air-conditioning control device (20) of claim 1, wherein
the inspection processing means is further configured to inspect the clogging of the filter (15) by comparing a first time constant of the temperature related to the heat exchanger (12) based on the acquired log data (301-304) with a second time constant prepared in advance.

**10.** The air-conditioning control device (20) of claim 9, wherein

the control means is further configured to alternately repeat performing the normal operation and performing the inspection operation,
the log data acquisition means is further configured to acquire log data (301-304) including a set number indicating number of times of the repetition, temperature data indicating the temperature related to the heat exchanger (12) measured by the temperature sensor (16), and the time when the temperature is measured, every time the inspection operation is repeated, and
the inspection processing means is further configured to inspect the clogging of the filter (15) by comparing the first time constant of the temperature related to the heat exchanger (12) based on the log data (301-304) with the second time constant prepared in advance, for each set number included in the acquired log data (301-304).

**11.** The air-conditioning control device (20) of claim 1, wherein

the air conditioner (10) comprises a plurality of indoor units (10a) each comprising the heat exchanger (12), and
when performing the inspection operation for one of the plurality of indoor units (10a), the control means is further configured to stop the operation of the other indoor units (10a).

**12.** The air-conditioning control device (20) of claim 1, wherein

the air conditioner (10) comprises a valve for adjusting the refrigerant supplied to the heat exchanger (12), and
the control means is further configured to control the valve to close the valve when performing the inspection operation.

**13.** The air-conditioning control device (20) of claim 1, wherein

the air conditioner (10) comprises a compressor (13) for adjusting the refrigerant supplied to the heat exchanger (12), and
the control means is further configured to control the compressor (13) to stop operation of the compressor (13) when performing the inspection operation.

**14.** The air-conditioning control device (20) of claim 1, wherein

the air conditioner (10) comprises a plurality of fans, and
the control means is further configured to drive the plurality of fans (11a, 11b) at a same number of revolutions when performing the inspection operation.

**15.** An inspection method performed by an air-conditioning control device (20) connected to an air conditioner (10) which adjusts a temperature of air taken in via a filter (15) by driving a fan (11), by a heat exchanger (12) supplied with a refrigerant, and blows the air, the inspection method comprising:

performing an inspection operation of the air conditioner (10) driving the fan (11) in a state in which the refrigerant is not supplied to the heat exchanger (12);
acquiring log data (301-304) including temperature data indicating a temperature of the heat exchanger (12) measured by a temperature sensor (16) during the inspection operation and a time when the temperature is measured; and
inspecting clogging of the filter (15), based on the acquired log data (301-304);
the method further comprising:

performing a normal operation of the air conditioner (10) supplying the refrigerant to the heat exchanger (12) before performing the inspection operation; and
after starting the normal operation, performing the inspection operation when the temperature related to the heat exchanger (12) measured by the temperature sensor (16) is out of a range of a predetermined value.

16. A program performed by a computer of an air-conditioning control device (20) connected to an air conditioner which adjusts a temperature of air taken in via a filter (15) by driving a fan (11), by a heat exchanger (12) supplied with a refrigerant, and blows the air, the program urging the computer to:

perform an inspection operation of the air conditioner (10) driving the fan (11) in a state in which the refrigerant is not supplied to the heat exchanger (12);
acquire temperature data indicating a temperature of the heat exchanger (12) measured by a temperature sensor (16) provided during the inspection operation and log data (301-304) including a time when the temperature is measured;
inspect clogging of the filter (15), based on the acquired log data (301-304);
perform a normal operation of the air conditioner (10) supplying the refrigerant to the heat exchanger (12) before performing the inspection operation; and
after starting the normal operation, perform the inspection operation when the temperature related to the heat exchanger (12) measured by the temperature sensor (16) is out of a range of a predetermined value.

**Patentansprüche**

1. Klimaanlagensteuervorrichtung (20), die mit einer Klimaanlage (10) verbunden ist, die so konfiguriert ist, dass sie eine Temperatur von über einen Filter (15) durch Antreiben eines Ventilators (11) angesaugter Luft durch einen mit einem Kältemittel versorgten Wärmetauscher (12) anpasst und die Luft ausbläst, wobei die Klimaanlagensteuervorrichtung (20) Folgendes umfasst:

Steuermittel, die so konfiguriert sind, dass sie einen Inspektionsvorgang der Klimaanlage (10) durchführen durch Antreiben des Ventilators (11) in einem Zustand, in dem das Kältemittel dem Wärmetauscher (12) nicht zugeführt wird;
Protokolldatenerfassungsmittel (22), die so konfiguriert sind, dass sie Protokolldaten (301-304) erfassen, die Temperaturdaten einschließen, die eine Temperatur des Wärmetauschers (12) angeben, die von einem Temperatursensor (16) während des Inspektionsvorgangs gemessen wurde, und einen Zeitpunkt, an dem die Temperatur gemessen wurde; und
Inspektionsverarbeitungsmittel (24), die so konfiguriert sind, dass sie basierend auf den erfassten Protokolldaten (301-304) auf Verstopfung des Filters (15) inspizieren;
wobei die Steuermittel ferner konfiguriert sind zum:

Durchführen eines normalen Betriebs der Klimaanlage (10), bei dem das Kältemittel dem Wärmetauscher (12) zugeführt wird, vor Durchführen des Inspektionsvorgangs; und
nach Beginn des normalen Betriebs die Steuermittel so konfiguriert sind, dass sie den Inspektionsvorgang durchführen, wenn die vom Temperatursensor (16) gemessene auf den Wärmetauscher (12) bezogene Temperatur außerhalb eines Bereichs eines vorbestimmten Wertes liegt.

2. Klimaanlagensteuervorrichtung (20) nach Anspruch 1, wobei
die Steuermittel ferner so konfiguriert sind, dass sie eine erforderliche Wärmemenge der Klimaanlage (10) zum Zeitpunkt des Durchführens des normalen Betriebs auf ein Maximum einstellen.

3. Klimaanlagensteuervorrichtung (20) nach Anspruch 1, wobei
vor Durchführen des Inspektionsvorgangs die Steuermittel ferner so konfiguriert sind, dass sie dem Wärmetauscher (12) entsprechend einer maximal erforderlichen Wärmemenge der Klimaanlage (10) das Kältemittel zuführen und einen speziellen Vorgang des Anhaltens des Ventilators (11) durchführen.

4. Klimaanlagensteuervorrichtung (20) nach Anspruch 1, wobei

der Temperatursensor (16) auf einer Oberfläche des Wärmetauschers (12) angeordnet ist und
die auf den Wärmetauscher (12) bezogene Temperatur eine Oberflächentemperatur des Wärmetauschers (12) ist.

5. Klimaanlagensteuervorrichtung (20) nach Anspruch 1, wobei

der Temperatursensor (16) an einer Stelle angeordnet ist, an der die Luft aus der Klimaanlage (10) ausgeblasen wird, und
die auf den Wärmetauscher (12) bezogene Temperatur eine Temperatur der aus der Klimaanlage (10) ausgeblasenen Luft ist.

6. Klimaanlagensteuervorrichtung (20) nach Anspruch 1, wobei

der Temperatursensor (16) einen ersten Temperatursensor umfasst, der an einer Stelle bereitgestellt ist, an der die Luft in die Klimaanlage (10) eingesaugt wird, und einen zweiten Temperatursensor, der an der Stelle bereitgestellt ist, an der die Luft aus der Klimaanlage (10) ausgeblasen wird, und
die auf den Wärmetauscher (12) bezogene Temperatur eine Temperatur ist, die auf einer vom ersten Temperatursensor gemessenen Temperatur und einer vom zweiten Temperatursensor gemessenen Temperatur basiert.

7. Klimaanlagensteuervorrichtung (20) nach Anspruch 1, wobei
nach Beginn des Inspektionsvorgangs die Steuermittel so konfiguriert sind, dass sie den Inspektionsvorgang anhalten, wenn ein Steuerzustand der Klimaanlage (10) ein instabiler Zustand wird.

8. Klimaanlagensteuervorrichtung (20) nach Anspruch 1, wobei
die Steuermittel ferner so konfiguriert sind, dass sie Informationen erfassen, die einen Managementzustand eines Gebäudes angeben, in dem die Klimaanlage (10) installiert ist, und basierend auf dem Managementzustand des Gebäudes eine Zeitzone bestimmen, in der der Inspektionsvorgang durchgeführt werden soll.

9. Klimaanlagensteuervorrichtung (20) nach Anspruch 1, wobei
die Inspektionsverarbeitungsmittel ferner so konfiguriert sind, dass sie die Verstopfung des Filters (15) durch Vergleichen einer ersten Zeitkonstante der auf den Wärmetauscher (12) bezogenen Temperatur basierend auf den erfassten Protokolldaten (301-304) mit einer im Voraus erstellten zweiten Zeitkonstante inspizieren.

10. Klimaanlagensteuervorrichtung (20) nach Anspruch 9, wobei

die Steuermittel ferner so konfiguriert sind, dass sie abwechselnd Durchführen des normalen Betriebs und Durchführen des Inspektionsvorgangs wiederholen,
wobei die Protokolldatenerfassungsmittel ferner so konfiguriert sind, dass sie Protokolldaten (301-304) erfassen, die eine festgelegte Zahl einschließen, die Anzahl der Wiederholungen, Temperaturdaten, die die mit dem Temperatursensor (16) gemessene auf den Wärmetauscher (12) bezogene Temperatur angeben, und den Zeitpunkt, an dem die Temperatur gemessen wurde, jedes Mal, wenn der Inspektionsvorgang wiederholt wird, angibt und
wobei die Inspektionsverarbeitungsmittel ferner so konfiguriert sind, dass sie die Verstopfung des Filters (15) durch Vergleichen der ersten Zeitkonstante der auf den Wärmetauscher (12) bezogenen Temperatur basierend auf den Protokolldaten (301-304) mit der im Voraus vorbereitetet zweiten Zeitkonstante für jede in den erfassten Protokolldaten (301-304) eingeschlossene festgelegte Zahl prüfen.

11. Klimaanlagensteuervorrichtung (20) nach Anspruch 1, wobei

die Klimaanlage (10) eine Vielzahl von Inneneinheiten (10a) umfasst, die jeweils den Wärmetauscher (12) umfassen, und
beim Durchführen des Inspektionsvortangs an einer der Vielzahl von Inneneinheiten (10a) die Steuermittel ferner so konfiguriert sind, dass sie den Betrieb der anderen Inneneinheiten (10a) anhalten.

12. Klimaanlagensteuervorrichtung (20) nach Anspruch 1, wobei

die Klimaanlage (10) ein Ventil zum Anpassen des dem Wärmetauscher (12) zugeführten Kältemittels umfasst und
die Steuermittel ferner so konfiguriert sind, dass sie das Ventil beim Durchführen des Inspektionsvorgangs schließen.

13. Klimaanlagensteuervorrichtung (20) nach Anspruch 1, wobei

die Klimaanlage (10) einen Kompressor (13) zum Anpassen des dem Wärmetauscher (12) zugeführten Kältemittels umfasst und

**EP 3 879 197 B1**

die Steuermittel ferner so konfiguriert sind, dass sie den Kompressor (13) steuern, um Betrieb des Kompressors (13) beim Durchführen des Inspektionsvorgangs anzuhalten.

14. Klimaanlagensteuervorrichtung (20) nach Anspruch 1, wobei

die Klimaanlage (10) eine Vielzahl von Ventilatoren umfasst und
die Steuermittel ferner so konfiguriert sind, dass sie die Vielzahl von Ventilatoren (11a, 11b) beim Durchführen des Inspektionsvorgangs mit der gleichen Anzahl von Umdrehungen antreiben.

15. Inspektionsverfahren, das von einer Klimaanlagensteuervorrichtung (20) durchgeführt wird, die mit einer Klimaanlage (10) verbunden ist, die eine Temperatur von über einen Filter (15) durch Antreiben eines Ventilators (11) angesaugter Luft durch einen mit Kältemittel versorgten Wärmetauscher (12) anpasst und die Luft ausbläst, wobei das Inspektionsverfahren Folgendes umfasst:

Durchführen eines Inspektionsvorgangs der Klimaanlage (10) durch Antreiben des Ventilators (11) in einem Zustand, in dem das Kältemittel dem Wärmetauscher (12) nicht zugeführt wird;
Erfassen von Protokolldaten (301-304), die Temperaturdaten einschließen, die eine Temperatur des Wärmetauschers (12) angeben, die von einem Temperatursensor (16) während des Inspektionsvorgangs gemessen wurde, und einen Zeitpunkt, an dem die Temperatur gemessen wurde; und
Inspizieren auf Verstopfung des Filters (15) basierend auf den erfassten Protokolldaten (301-304);
wobei das Verfahren ferner Folgendes umfasst:

Durchführen eines normalen Betriebs der Klimaanlage (10), bei dem das Kältemittel dem Wärmetauscher (12) zugeführt wird, vor Durchführen des Inspektionsvorgangs; und
nach Beginn des normalen Betriebs Durchführen des Inspektionsvorgangs, wenn die vom Temperatursensor (16) gemessene auf den Wärmetauscher (12) bezogene Temperatur außerhalb eines Bereichs eines vorbestimmten Wertes liegt.

16. Programm, das von einem Computer einer Klimaanlagensteuervorrichtung (20) durchgeführt wird, die mit einer Klimaanlage verbunden ist, die eine Temperatur von über einen Filter (15) durch Antreiben eines Ventilators (11) angesaugter Luft durch einen mit Kältemittel versorgten Wärmetauscher (12) anpasst und die Luft ausbläst, wobei das Programm den Computer drängt zum:

Durchführen eines Inspektionsvorgangs der Klimaanlage (10) durch Antreiben des Ventilators (11) in einem Zustand, in dem das Kältemittel dem Wärmetauscher (12) nicht zugeführt wird;
Erfassen von Temperaturdaten, die eine Temperatur des Wärmetauschers (12) angeben, die von einem während des Inspektionsvorgangs bereitgestellten Temperatursensor (16) gemessen wurde, und wobei die Protokolldaten (301-304) einen Zeitpunkt einschließen, an dem die Temperatur gemessen wurde;
Inspizieren auf Verstopfung des Filters (15) basierend auf den erfassten Protokolldaten (301-304);
Durchführen eines normalen Betriebs der Klimaanlage (10), bei dem das Kältemittel dem Wärmetauscher (12) zugeführt wird, vor Durchführen des Inspektionsvorgangs;
und nach Beginn des normalen Betriebs Durchführen des Inspektionsvorgangs, wenn die vom Temperatursensor (16) gemessene auf den Wärmetauscher (12) bezogene Temperatur außerhalb eines Bereichs eines vorbestimmten Wertes liegt.

**Revendications**

1. Dispositif de commande de climatisation (20) relié à un climatiseur (10) configuré pour ajuster une température de l'air aspiré via un filtre (15) en entraînant un ventilateur (11), par un échangeur de chaleur (12) alimenté en réfrigérant, et pour souffler l'air, le dispositif de commande de climatisation (20) comprenant :

des moyens de commande configurés pour réaliser une opération d'inspection du climatiseur (10) entraînant le ventilateur (11) dans un état dans lequel le réfrigérant n'est pas fourni à l'échangeur de chaleur (12) ;
des moyens d'acquisition de données de journalisation (22) configurés pour acquérir des données de journalisation (301-304) incluant des données de température indiquant une température de l'échangeur de chaleur (12) mesurée par un capteur de température (16) pendant l'opération d'inspection et l'heure à laquelle la température est mesurée ; et

des moyens de traitement d'inspection (24) configurés pour inspecter le colmatage du filtre (15), sur la base des données de journalisation acquises (301-304) ;

dans lequel les moyens de commande sont en outre configurés pour :

réaliser une opération normale du climatiseur (10) alimentant l'échangeur de chaleur (12) en réfrigérant avant de réaliser l'opération d'inspection ; et

après le début de l'opération normale, les moyens de commande sont configurés pour réaliser l'opération d'inspection lorsque la température relative à l'échangeur de chaleur (12) mesurée par le capteur de température (16) est hors d'une plage de valeur prédéterminée.

2.  Dispositif de commande de climatisation (20) selon la revendication 1, dans lequel
les moyens de commande sont en outre configurés pour définir une quantité de chaleur requise du climatiseur (10) au moment de la réalisation de l'opération normale au maximum.

3.  Dispositif de commande de climatisation (20) selon la revendication 1, dans lequel
avant de réaliser l'opération d'inspection, les moyens de commande sont en outre configurés pour fournir le réfrigérant à l'échangeur de chaleur (12) conformément à une quantité de chaleur requise maximale du climatiseur (10) et réaliser une opération spéciale d'arrêt de l'entraînement du ventilateur (11).

4.  Dispositif de commande de climatisation (20) selon la revendication 1, dans lequel

le capteur de température (16) est agencé sur une surface de l'échangeur de chaleur (12), et
la température relative à l'échangeur de chaleur (12) est une température de surface de l'échangeur de chaleur (12).

5.  Dispositif de commande de climatisation (20) selon la revendication 1, dans lequel

le capteur de température (16) est prévu à une position à laquelle l'air est soufflé par le climatiseur (10), et
la température relative à l'échangeur de chaleur (12) est une température de l'air soufflé par le climatiseur (10).

6.  Dispositif de commande de climatisation (20) selon la revendication 1, dans lequel

le capteur de température (16) comprend un premier capteur de température prévu à une position à laquelle l'air est aspiré dans le climatiseur (10), et un second capteur de température prévu à une position à laquelle l'air est soufflé hors du climatiseur (10), et
la température relative à l'échangeur de chaleur (12) est une température basée sur une température mesurée par le premier capteur de température et une température mesurée par le second capteur de température.

7.  Dispositif de commande de climatisation (20) selon la revendication 1, dans lequel
après le début de l'opération d'inspection, les moyens de commande sont en outre configurés pour arrêter l'opération d'inspection lorsqu'un état de commande du climatiseur (10) devient un état instable.

8.  Dispositif de commande de climatisation (20) selon la revendication 1, dans lequel
les moyens de commande sont en outre configurés pour acquérir des informations indiquant un état de gestion d'un bâtiment dans lequel le climatiseur (10) est installé, et déterminer une zone temporelle dans laquelle l'opération d'inspection doit être réalisée en fonction de l'état de gestion du bâtiment.

9.  Dispositif de commande de climatisation (20) selon la revendication 1, dans lequel
les moyens de traitement d'inspection sont en outre configurés pour inspecter le colmatage du filtre (15) en comparant une première constante de temps de la température relative à l'échangeur de chaleur (12) sur la base des données de journalisation acquises (301-304) à une seconde constante de temps préparée à l'avance.

10. Dispositif de commande de climatisation (20) selon la revendication 9, dans lequel

les moyens de commande sont en outre configurés pour répéter alternativement la réalisation de l'opération normale et la réalisation de l'opération d'inspection,
les moyens d'acquisition de données de journalisation sont en outre configurés pour acquérir des données de journalisation (301-304) incluant un nombre défini indiquant un nombre de répétitions, des données de température indiquant la température relative à l'échangeur de chaleur (12) mesurée par le capteur de température (16), et l'heure à laquelle la température est mesurée, à chaque répétition de l'opération d'inspection, et

les moyens de traitement d'inspection sont en outre configurés pour inspecter le colmatage du filtre (15) en comparant la première constante de temps de la température relative à l'échangeur de chaleur (12) sur la base des données de journalisation (301-304) à la deuxième constante de temps préparée à l'avance, pour chaque nombre défini inclus dans les données de journalisation acquises (301-304).

11. Dispositif de commande de climatisation (20) selon la revendication 1, dans lequel

le climatiseur (10) comprend une pluralité d'unités intérieures (10a) comprenant chacune l'échangeur de chaleur (12), et

lors de la réalisation de l'opération d'inspection de l'une de la pluralité d'unités intérieures (10a), les moyens de commande sont en outre configurés pour arrêter le fonctionnement des autres unités intérieures (10a).

12. Dispositif de commande de climatisation (20) selon la revendication 1, dans lequel

le climatiseur (10) comprend une vanne permettant d'ajuster le réfrigérant fourni à l'échangeur de chaleur (12), et

les moyens de commande sont en outre configurés pour commander la fermeture de la vanne lors de la réalisation de l'opération d'inspection.

13. Dispositif de commande de climatisation (20) selon la revendication 1, dans lequel

le climatiseur (10) comprend un compresseur (13) pour ajuster le réfrigérant fourni à l'échangeur de chaleur (12), et

les moyens de commande sont en outre configurés pour commander le compresseur (13) afin d'arrêter le fonctionnement du compresseur (13) lors de la réalisation de l'opération d'inspection.

14. Dispositif de commande de climatisation (20) selon la revendication 1, dans lequel

le climatiseur (10) comprend une pluralité de ventilateurs, et

les moyens de commande sont en outre configurés pour entraîner la pluralité de ventilateurs (11a, 11b) à un même nombre de tours lors de la réalisation de l'opération d'inspection.

15. Procédé d'inspection réalisé par un dispositif de commande de climatisation (20) relié à un climatiseur (10) qui ajuste une température de l'air aspiré via un filtre (15) en entraînant un ventilateur (11), par un échangeur de chaleur (12) alimenté en réfrigérant, et qui souffle l'air, le procédé d'inspection comprenant :

la réalisation d'une opération d'inspection du climatiseur (10) entraînant le ventilateur (11) dans un état dans lequel le réfrigérant n'est pas fourni à l'échangeur de chaleur (12) ;

l'acquisition de données de journalisation (301-304) incluant des données de température indiquant une température de l'échangeur de chaleur (12) mesurée par un capteur de température (16) pendant l'opération d'inspection et l'heure à laquelle la température est mesurée ; et

l'inspection du colmatage du filtre (15), sur la base des données de journalisation acquises (301-304) ;

le procédé comprenant en outre :

la réalisation d'un fonctionnement normal du climatiseur (10) alimentant l'échangeur de chaleur (12) en réfrigérant avant la réalisation de l'opération d'inspection ; et

après le début de l'opération normale, la réalisation de l'opération d'inspection lorsque la température relative à l'échangeur de chaleur (12) mesurée par le capteur de température (16) est hors d'une plage d'une valeur prédéterminée.

16. Programme réalisé par un ordinateur d'un dispositif de commande de climatisation (20) relié à un climatiseur qui ajuste une température de l'air aspiré via un filtre (15) en entraînant un ventilateur (11), par un échangeur de chaleur (12) alimenté en réfrigérant, et souffle l'air, le programme amenant l'ordinateur à :

réaliser une opération d'inspection du climatiseur (10) entraînant le ventilateur (11) dans un état dans lequel le réfrigérant n'est pas fourni à l'échangeur de chaleur (12) ;

acquérir des données de température indiquant une température de l'échangeur de chaleur (12) mesurée par un capteur de température (16) fourni pendant l'opération d'inspection et des données de journalisation (301-304) incluant l'heure à laquelle la température est mesurée ;

inspecter le colmatage du filtre (15), sur la base des données de journalisation acquises (301-304) ;

réaliser une opération normale du climatiseur (10) alimentant l'échangeur de chaleur (12) en réfrigérant avant de réaliser l'opération d'inspection ;

et après le début de l'opération normale, réaliser l'opération d'inspection lorsque la température relative à l'échangeur de chaleur (12) mesurée par le capteur de température (16) est hors d'une plage d'une valeur prédéterminée.

FIG. 1

FIG. 2

F I G. 3

F I G. 4

F I G. 5

```
                    ┌─────────┐
                    │  Start  │
                    └────┬────┘
                         │
          ┌──────────────▼──────────────┐
          │     Store control state     │──S1
          └──────────────┬──────────────┘
                         │
          ┌──────────────▼──────────────┐
          │     Start normal operation  │──S2
          └──────────────┬──────────────┘
                         │◄──────────────────────┐
          ┌──────────────▼──────────────┐         │
          │       Acquire log data      │──S3     │
          └──────────────┬──────────────┘         │
                         │                         │
          ┌──────────────▼──────────────┐         │
          │        Store log data       │──S4     │
          └──────────────┬──────────────┘         │
                         │            S5           │
                    ◄────▼────►                No  │
                  ◄    Stop timing?    ►───────────┘
                    ◄────┬────►
                         │ Yes
          ┌──────────────▼──────────────┐
          │     Stop normal operation   │──S6
          └──────────────┬──────────────┘
                         │
          ┌──────────────▼──────────────┐
          │   Start inspection operation│──S7
          └──────────────┬──────────────┘
                         │◄──────────────────────┐
          ┌──────────────▼──────────────┐         │
          │       Acquire log data      │──S8     │
          └──────────────┬──────────────┘         │
                         │                         │
          ┌──────────────▼──────────────┐         │
          │        Store log data       │──S9     │
          └──────────────┬──────────────┘         │
                         │           S10           │
                    ◄────▼────►                No  │
                  ◄    Stop timing?    ►───────────┘
                    ◄────┬────►
                         │ Yes
          ┌──────────────▼──────────────┐
          │   Stop inspection operation │──S11
          └──────────────┬──────────────┘
                         │
          ┌──────────────▼──────────────┐
          │   Restore control state of S1│──S12
          └──────────────┬──────────────┘
                         │
          ┌──────────────▼──────────────┐
          │      Inspection process     │──S13
          └──────────────┬──────────────┘
                         │
          ┌──────────────▼──────────────┐
          │   Output inspection result  │──S14
          └──────────────┬──────────────┘
                         │
                    ┌────▼────┐
                    │   End   │
                    └─────────┘
```

F I G. 6

| Time | Duration | Start/stop state | Operation mode | Set temperature | Amount of air |
|---|---|---|---|---|---|
| 2018/3/31 17:41 | 0:04:00 | On | Heating | 29°C | Weak |
| 2018/3/31 17:45 | 0:11:00 | On | Blowing | No | Strong |
| 2018/3/31 17:56 | 0:04:00 | On | Heating | 29°C | Weak |
| 2018/3/31 18:00 | 0:11:00 | On | Blowing | No | Strong |
| 2018/3/31 18:11 | 0:04:00 | On | Heating | 29°C | Weak |
| 2018/3/31 18:15 | 0:11:00 | On | Blowing | No | Strong |
| 2018/3/31 18:26 | 0:04:00 | On | Heating | 29°C | Weak |
| 2018/3/31 18:30 | 0:11:00 | On | Blowing | No | Strong |
| 2018/3/31 18:41 | 0:04:00 | On | Heating | 29°C | Weak |
| 2018/3/31 18:45 | 0:11:00 | On | Blowing | No | Strong |
| 2018/3/31 18:56 | 0:04:00 | On | Heating | 29°C | Weak |
| 2018/3/31 19:00 | 0:11:00 | On | Blowing | No | Strong |

F I G. 7

EP 3 879 197 B1

| Time | Set number | Valve opening degree | Temperature data |
|---|---|---|---|
| 2018/3/31 17:41 | 1 | 87.6 | 14.8 |
| 2018/3/31 17:42 | 1 | 95.3 | 16.6 |
| 2018/3/31 17:43 | 1 | 70.5 | 14.7 |
| 2018/3/31 17:44 | 1 | 50.7 | 9.4 |
| 2018/3/31 17:45 | 1 | 0.0 | 5.4 |
| 2018/3/31 17:46 | 1 | 0.0 | 2.3 |
| 2018/3/31 17:47 | 1 | 0.0 | 0.8 |
| 2018/3/31 17:48 | 1 | 0.0 | 0.3 |
| 2018/3/31 17:49 | 1 | 0.0 | 0.2 |
| 2018/3/31 17:50 | 1 | 0.0 | 0.2 |
| 2018/3/31 17:51 | 1 | 0.0 | 0.1 |
| 2018/3/31 17:52 | 1 | 0.0 | 0.1 |
| 2018/3/31 17:53 | 1 | 0.0 | 0.1 |
| 2018/3/31 17:54 | 1 | 0.0 | 0.7 |
| 2018/3/31 17:55 | 1 | 0.0 | 8.5 |
| 2018/3/31 17:56 | 2 | 93.8 | 11.2 |
| 2018/3/31 17:57 | 2 | 100.0 | 11.9 |
| 2018/3/31 17:58 | 2 | 82.0 | 9.4 |
| 2018/3/31 17:59 | 2 | 50.8 | 6.2 |
| 2018/3/31 18:00 | 2 | 0.0 | 3.9 |
| 2018/3/31 18:01 | 2 | 0.0 | 2.4 |
| 2018/3/31 18:02 | 2 | 0.0 | 0.8 |
| 2018/3/31 18:03 | 2 | 0.0 | 0.4 |
| 2018/3/31 18:04 | 2 | 0.0 | 0.2 |
| 2018/3/31 18:05 | 2 | 0.0 | 0.2 |
| 2018/3/31 18:06 | 2 | 0.0 | 0.1 |
| 2018/3/31 18:07 | 2 | 0.0 | 0.2 |
| 2018/3/31 18:08 | 2 | 0.0 | 0.2 |
| 2018/3/31 18:09 | 2 | 0.0 | 1.8 |
| 2018/3/31 18:10 | 2 | 0.0 | 8.4 |
| ... | ... | ... | ... |

301
302
303
304

F I G. 8

F I G. 9

| Time | Set number | Time constant (min) |
|---|---|---|
| 2018/3/31 17:45 | 1 | 1.12 |
| 2018/3/31 18:00 | 2 | 1.50 |
| 2018/3/31 18:15 | 3 | 1.51 |
| 2018/3/31 18:30 | 4 | 2.63 |
| 2018/3/31 18:45 | 5 | 1.91 |
| 2018/3/31 19:00 | 6 | 2.15 |

F I G. 10

| Date of inspection | Note | Time constant (min) | Increase rate |
|---|---|---|---|
| 2017/7/31 | Reference (new) | 1.39 | 100% |
| 2018/3/31 | Inspection | 1.80 | 130% |

F I G. 11

10a
Indoor unit

10a
Indoor unit

10a
Indoor unit

10b
Outdoor unit

F I G. 12

| Time | Duration | First indoor unit | | | | Second indoor unit | | | |
|---|---|---|---|---|---|---|---|---|---|
| | | Start/stop state | Operation mode | Set temperature | Amount of air | Start/stop state | Operation mode | Set temperature | Amount of air |
| 2018/3/31 17:41 | 0:04:00 | On | Heating | 29°C | Weak | Off | | | |
| 2018/3/31 17:45 | 0:11:00 | On | Blowing | No | Strong | Off | | | |
| 2018/3/31 17:56 | 0:04:00 | On | Heating | 29°C | Weak | Off | | | |
| 2018/3/31 18:00 | 0:11:00 | On | Blowing | No | Strong | Off | | | |
| 2018/3/31 18:11 | 0:04:00 | On | Heating | 29°C | Weak | Off | | | |
| 2018/3/31 18:15 | 0:11:00 | On | Blowing | No | Strong | Off | | | |
| 2018/3/31 18:26 | 0:04:00 | On | Heating | 29°C | Weak | Off | | | |
| 2018/3/31 18:30 | 0:11:00 | On | Blowing | No | Strong | Off | | | |
| 2018/3/31 18:41 | 0:04:00 | On | Heating | 29°C | Weak | Off | | | |
| 2018/3/31 18:45 | 0:11:00 | On | Blowing | No | Strong | Off | | | |
| 2018/3/31 18:56 | 0:04:00 | On | Heating | 29°C | Weak | Off | | | |
| 2018/3/31 19:00 | 0:11:00 | On | Blowing | No | Strong | Off | | | |
| 2018/3/31 19:11 | 0:04:00 | Off | | | | On | Heating | 29°C | Weak |
| 2018/3/31 19:15 | 0:11:00 | Off | | | | On | Blowing | No | Strong |
| 2018/3/31 19:26 | 0:04:00 | Off | | | | On | Heating | 29°C | Weak |
| 2018/3/31 19:30 | 0:11:00 | Off | | | | On | Blowing | No | Strong |
| 2018/3/31 19:41 | 0:04:00 | Off | | | | On | Heating | 29°C | Weak |
| 2018/3/31 19:45 | 0:11:00 | Off | | | | On | Blowing | No | Strong |
| 2018/3/31 19:56 | 0:04:00 | Off | | | | On | Heating | 29°C | Weak |
| 2018/3/31 20:00 | 0:11:00 | Off | | | | On | Blowing | No | Strong |
| 2018/3/31 20:11 | 0:04:00 | Off | | | | On | Heating | 29°C | Weak |
| 2018/3/31 20:15 | 0:11:00 | Off | | | | On | Blowing | No | Strong |
| 2018/3/31 20:26 | 0:04:00 | Off | | | | On | Heating | 29°C | Weak |
| 2018/3/31 20:30 | 0:11:00 | Off | | | | On | Blowing | No | Strong |

F I G. 13

EP 3 879 197 B1

FIG. 14

Start

Set required amount of air conditioner to maximum — S21

Start special operation — S22

Acquire log data — S23

Store log data — S24

S25

Exceed threshold value? — No

Yes

Stop special operation — S26

End

F I G. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108050650 A

- JP 2000074451 A